# NEUE EUROPÄISCHE PATENTSCHRIFT

(11) **EP 0 342 312 B2**
(45) Veröffentlichungstag und Bekanntmachung des Hinweises auf die Entscheidung über den Einspruch: **31.05.1995**
(45) Hinweis auf die Patenterteilung: 26.08.1992
(21) Anmeldenummer: 89101987.9
(22) Anmeldetag: 04.02.1989
(51) Int. Cl.: A61C 11/00

(54) **Verfahren und Vorrichtung zur scharnierachs- und zentrikbezüglichen Gleichschaltung bauungleicher Artikulatoren mit der Möglichkeit des Austausches von Kiefermodellen**
Device and method for assuring geometric compatibility between dissimilar articulators to make dental models interchangeable
Dispositif et méthode destinés à assurer la compatibilité par rapport à laxe de rotation et au centrage entre articulateurs de construction non compatible dans le but de pouvoir interchanger des modèles dentaires

(30) Priorität: 18.05.1988 DE 3816820; 26.05.1988 DE 3817867
(43) Veröffentlichungstag der Anmeldung: 23.11.1989
(73) Patentinhaber: Hunger, Erich, D-69207 Sandhausen (DE)
(72) Erfinder: Schreiber, Hans, Dr. Dr., D-6940 Weinheim (DE)
(74) Vertreter: Meyer-Roedern, Giso, Dr.

(56) Entgegenhaltungen:
- WO-A-83/00431
- DE-C- 3 202 997
- DE-C- 3 511 928
- US-A- 3 653 126
- US-A- 4 496 319
- Lehrbuch der Zahntechnik, Bd.1, Hohmann et al., Quintessenz Verlags-GmbH, 1982, S. 164
- Catalogue: Instruments and Equipment for Better Dentistry, Teledyne, Hanau 1981, S. 16

## Beschreibung

Die Erfindung betrifft ein Verfahren nebst Vorrichtung zum identischen schädel- und zentrikbezüglichen Einbau von Kiefermodellen in die gängigsten Artikulatorensysteme.

In der Totalprothetik, der Kronen- und Brückentechnik aber auch im Rahmen der Funktionsdiagnostik werden nach Abdrucknahme am Patienten gefertigte Kiefermodelle in sogenannte Artikulatoren eingebaut oder einartikuliert.

Dabei simulieren diese Geräte die Kieferbewegung des zu Behandelnden, wobei neben der reinen Öffnungs- und Schließbewegung des Unterkiefers um eine Rotationsachse durch die beiden Kiefergelenkköpfchen auch Vorschub- und Seitwärtsbewegungen nachgefahren werden können.

Naturgemäß kann eine solche Simulation nur mehr oder weniger genau erfolgen, wobei der Artikulatortyp bestimmt, welcher Informationsgehalt vom Patienten eingegeben werden kann. Das Ausmaß dieser Informationseingabe entscheidet aber auch darüber, welchen Informationsgehalt das Gerät zurückgeben bzw. durch welchen Informationsgehalt eine darin angefertigte prothetische Arbeit mitbestimmt werden kann.

Bei anspruchsvolleren teiljustierbaren Artikulatoren, insbesondere aber bei volljustierbaren Geräten ist der schädelbezügliche Oberkiefereinbau obligatorisch.

Gemeint ist damit, daß das Oberkiefermodell in seiner räumlichen Lage zu den künstlichen Kiefergelenken des Artikulators so eingebaut wird, wie es annähernd dem Patientenfall entspricht. Im Praxisablauf wird dies durch einen sogenannten Gesichtsbogen ermöglicht, der die Position des Oberkiefers in Relation zu den Kiefergelenken und zu einer willkürlichen Ebene, z. B. der Scharnierachsen-Orbitalebene, abgreift. Bei einigen Geräterypen ist es möglich, zu dieser Ebene weitere Bezugsgrößen, wie die Gelenkbahnenneigung oder den Bennettwinkel einzustellen.

Der Unterkiefermodelleinbau erfolgt über ein sogenanntes Zentrikregistrat, wobei der Patient bevorzugt in eine Wachsschablone einbeißt, nachdem mit Hilfe des Behandlers der Unterkiefer in die sogenannte zentrische Kiefergelenksposition oder die terminale Scharnierachsposition geführt wurde.

Macht eine prothetische Arbeit z. B. eine Bißhebung notwendig, so erfolgt dies im praktischen Laboralltag dadurch, daß nach Ober- und Unterkiefermodelleinbau der Artikulator auf das gewünschte Maß durch Scharnierbewegung um seine Rotationsachse geöffnet wird.

Es ist verständlich, daß es bei diesem Vorgehen zwangsläufig zu Fehlem kommen muß, wenn die Zuordnung des Oberkiefermodells zur Artikulatorrotationsachse ein anderes Verhältnis aufweist als die entsprechende Relation am Patienten.

Nun sind bei den verwendeten Gesichtsbogentypen nur wenige Geräte kompatibel mit verschiedenen Artikulatorsystemen.

Dies bedeutet, daß sich der Behandler bei einem geplanten schädelbezüglichen Modelleinbau auf einen Artikulatortyp und damit den entsprechenden Gesichtsbogen festlegen muß. Entsprechend ist damit auch das Labor zur Herstellung der prothetischen Arbeit an diesen Artikulatortyp gebunden.

Dabei arbeiten alle gängigen Artikulatorsysteme prinzipiell gleich, indem sogenannte Gipsträgerplatten vormontiert und über einen Gipssockel mit den Modellen verbunden werden.

Unterschiedliche Artikulatoren unterscheiden sich dabei sowohl in der Bauhöhe, der Anordnung der künstlichen Kiefergelenke und in den Abmessungen der Gipsträger.

Artikulatoren sind Computern vergleichbar, indem sie, wie oben beschrieben, Informationen liefern , wenn sie zuvor mit Informationen gespeichert wurden. Im normalen Routinealltag genügen teiljustierbare Artikulatoren, bei denen einige Werte, wie z. B. die Gelenkbahnneigung oder der sogenannte Bennettwinkel fest vorgegeben sind.

Bei den volljustierbaren Artikulatoren können diese Werte neben anderen Parametern individuell eingestellt werden.

Bereits bei teiljustierbaren Geräten besteht vielfach die Möglichkeit eines schädelbezüglichen Oberkiefereinbaus.

Entsprechend der Auslegung des jeweiligen Artikulator-Oberkieferarmes ergibt sich damit zwangsläufig für die verschiedenen Artikulatorsysteme ein verschieden hoher Gipssockel. Die Bauhöhe des Artikulators bestimmt nach der Zuordnung des Unterkiefermodelles zum eingebauten Oberkiefermodell die Höhe des Unterkiefergipssockels.

Die Möglichkeit, zwei Geräte simultan ohne Neumontage einzusetzen, gemeint ist die Übertragbarkeit von vormontierten Modellen von einem Gerät auf das andere, was von Wichtigkeit sein kann, bei der Arbeit mit einem Fremdlabor, ist bislang nur beim gleichen Artikulatortyp bekannt.

Vorliegender Erfindung liegt daher die Aufgabe zugrunde, ein Verfahren nebst Vorrichtung zu schaffen, womit es ermöglicht wird, einen schädelbezüglichen Modelleinbau, der mit Gesichtsbogen A in Artikulator A durchgeführt wurde, in einem beliebigen Artikulator B zu übertragen, ohne am selben Patienten mit dem entsprechenden Gesichtsbogen B die Situation noch einmal abzugreifen.

Mit der vorliegenden Erfindung ist es sogar möglich, schädelbezüglich eingebaute Modelle von Artikulator A auf einen Artikulator C zu übentagen, für den vom Hersteller ein Gesichtsbogen überhaupt nicht konzipiert wurde.

Somit wird einerseits das Abnehmen und das sichere Reponieren von Kiefermodellen gestattet, darüber hinaus aber auch nicht nur die Gleichschaltung identischer Artikulatotypen, sondern sogar die Gleichschaltung verschiedener Artikulatortypen und Fabrikate erlaubt.

Die Anwendung des erfindungsgemäßen Verfahrens und derzugehörigen Vorrichtung ist besonders dann von Nutzen, wenn Artikulatoren gleicher oder verschiedener Bauart durch Verwendung eines entsprechenden Splitcastbausatzes gleichgeschaltet wurden, so daß Modelle, die von besagter Splitcastplatte durch Magnetkraft abnehmbar und exakt reponierbar sind, auf andere, mit der gleichen Splitcastplatte gleichgeschaltete Artikulatortypen, umgesetzt werden können.

Der besondere Vorteil der Erfindung ist dementsprechend darin zu sehen, daß der Behandler seinen gewohnten Gesichtsbogen und zur Kontrolle seinen Artikulator benutzt, während das Labor nach Übernahme der entsprechenden Parameter einen anderen Artikulator verwenden kann, der möglicherweise weitreichendere Einzelaufgaben zu erfüllen in der Lage ist.

Diese Aufgabe wird durch das Verfahren gemäß Anspruch 1 bis 8 sowie durch die Vorrichtung gemäß Anspruch 9 gelöst.

Besondere Ausführungsmerkmale sind in den Ansprüchen 10 bis 34 gekennzeichnet, wobei die Vorrichtung zum schädelbezüglichen Einbau von Kiefermodellen dadurch gekennzeichnet ist, daß sie aus einer artikulatorspezifischen Artikulatoroasisplatte und einer auf dieser verfahr- und arretierbaren Grundplatte besteht, auf der senkrecht angeordnet eine Hülse befestigt ist, in der exakt geführt ein Rundstab in der Vertikalen verfahrbar sowie axial notierbar und arretierbar angeordnet ist, an dessen oberen Ende eine Trägerplatte zur exakten Aufnahme einer Modellträgeroder Splitcastplatte befestigt ist, wobei die Position der Grundplatte und die vertikale und axiale Position des Rundstabes so gewählt ist, daß ein an der Trägerplatte über einen Querstab befestigter Ausrichtbogen mit bevorzugt getrennt und präzise geführten Seitarmen so justiert wird, daß Nadelmarkierungen an den Seitarmen auf die Rotationsachse des Artikulators ausgerichtet werden können, wobei die auf der Trägerplatte positionierte Splitcastplatte dann mit einer am Artikulatoroberkieferarm montierten Artikulatormontageplatte über ein Zwischenmedium wie z. B. Gips, Kunststoff oder anderes lösbar miteinander verbunden werden.

Die räumliche Zuordnung der Modellplatte zur Artikulatormontageplatte im Bereich des Oberkiefers erfolgt beim Ausgangsartikulator mit der Minimaldistanz zwischen Artikulatoroberkieferarm und Schamierachse bevorzugt fest bündig, wobei die Modelloder Splitcastplatte der Trägerplatte der montierten Vorrichtung aufliegt,

Die räumliche Zuordnung von Modellplatte und Montageplatte bei den weiteren Artikulatortypen wird dadurch erreicht, daß die Position der Oberkiefemodellplatte vom Ausgangsartikulator über den einjustierten Ausrichtbogen abgegriffen und nach Umsetzen der Vorrichtung in den jeweils gleichzuschaltenden Artikulator durch Aufsetzen der Grundplatte auf die kompatible Artikulatorbasisplatte diese festgelegte Beziehung zur Scharnierachse durch Vertikal- und Horizontal-(Sagittal-)Bewegung der Vorrichtung beim Einbau der identischen Modell- oder Splitcastplatten in analoger Weise unter Verwendung einer artikulatorkompatiblen Montageplatte Berücksichtigung findet

Die Zuordnung der Unterkiefer-Splitcastplatten zur zentrischen Gleichschaltung erfolgt über einen sogenannten Zentrikblock, wobei als Ausgangsartikulator das Gerät mit dem Minimalabstand vom Artikulatorunterkieferarm zur Schamierachse dient und wobei dieser Artikulator bereits schamierachsbezüglich einjustiert wurde. Die räumliche Zuordnung der Modellplatte zur Montageplatte ist beim Ausgangsartikulator prinzipiell in horizontaler und vertikaler Richtung willkürlich, optimiert jedoch horizontal und möglichst bündig. Bei den folgenden Artikulatortypen wird mit dem im Ausgangsartikulator hergestellten Zentrikblock die räumliche Zuordnung der jeweiligen Unterkiefer-Splitcastplatten zu den scharnierachsbezüglichen eingebauten Oberkiefer-Splitcastplatten bewerkstelligt.

Eine besonders bevorzugte Ausführungsform ist dadurch gekennzeichnet, daß die Artikulatorbasisplatte Gewinde und Einfräsungen aufweist, die zum Einbau in den jeweiligen Artikulatortyp dienen, daß diese Gewinde und Einfräsungen auch als auswechselbare Einlageteile vorliegen können, die damit eine größere Kompatibilität gewährleisten, und daß darüberhinaus auf der Atikulatorbasisplatte zusätzliche Gewindebohrungen angebracht sind, die zur Arretierung der Grundplatte dienen.

Eine weitere bevorzugte Ausführungsform ist dadurch gekennzeichnet, daß die Grundplatte mit einem Langloch versehen ist, das bevorzugt in sagittaler Richtung des Artikulators ausgerichtet ist und damit die Verfahrbarkeit der Grundplatte bei nichtaktivierter Verschraubung zur Artikulatorbasisplatte in sagittaler Richtung erlaubt, eine Rotationsbewegung zuläßt und je nach der Stärke der Fixationsschraube auch eine körperliche Seitbewegung der Grundplatte zuläßt, wobei ein Aktivieren der Fixationsschraube die Grundplatte auf der Artikulatorbasisplatte feststellt.

Eine weitere besonders bevorzugte Ausführungsform ist dadurch gekennzeichnet, daß zum schädelbezüglichen Einbau von Kiefermodellen die Artikulatorbasisplatte parallel zu den artikulatorspezifischen Fräsungen ein positives oder negatives Relief trägt, das mit einem negativen oder positiven Relief Grundplatte derart korrespondiert, daß die Grundplatte auf der Artikulatorbasisplatte lediglich sagittal verschiebbar ist, und daß zur Fixation der Grundplatte Fixationsschrauben dienen, die durch bevorzugt symmetrische angeordnete Langlöcher der Grundplatte geführt in die Artikulatorbasisplatte eingreifen.

Eine weitere besonders bevorzugte Ausführungsform ist dadurch gekennzeichnet, daß die Basisplatte in bevorzugt zentraler Position eine Hülse oder ein Rohr senkrecht angeordnet trägt, die oder das exakt geführt einen Rundstab oder aus Materialersparnis ein weiteres Rohr aufnimmt, der oder das in der Vertikalen verfahrbar und axial rotierbar ist und über eine Fixationsschraube festgestellt werden kann.

Eine weitere besonders bevorzugte Ausführungsform ist dadurch gekennzeichnet, daß in bevorzugt zentraler Position der Grundplatte ein Rundstab vertikal angeordnet ist, über den eine exakt gearbeitete Hülse oder ein Rohr vertikal verschiebbar und axial rotierbar verfahren und über eine Fixationsschraube festgestellt werden kann.

Eine weitem besonders bevorzugte Ausführungsform ist dadurch gekennzeichnet, daß die Basisplatte statt eines Rundstabes ein vertikal angeordnetes anders geformtes Profil trägt, in dem paßgenau geschiebeartig ein zweites Profil die vertikale Verfahrbarkeit und Feststellbarkeit erlaubt.

Eine weitere besonders bevorzugte Ausführungsform ist dadurch gekennzeichnet, daß die Basisplatte mehrere Führungselemente wie Hülsen, Rundstäbe oder Profile aufweist.

Eine weitere besonders bevorzugte Ausführungsform ist dadurch gekennzeichnet, daß zum schädelbezüglichen Einbau von Kiefermodellen an dem paßgenau gearbeiteten Innenstab oder der Innenhülse in exakt vertikaler Richtung eine Markierung angebracht ist, die mit einer zweiten Markierung an der Außenhülse korrespondiert und die es ermöglicht, die Drehrichtung bzw. die Position des Innenstabes mit der montierten Trägerplatte bei Einzelanordnung von Hülse und Stab festzulegen.

Eine weitere besonders bevorzugte Ausführungsform ist dadurch gekennzeichnet, daß auf dem oder den vertikal verschiebbaren Hülsen, Rundstäben oder Profilen eine Trägerplatte angeordnet ist, die auf der der Arretierung gegenüberliegenden Seite ein negatives oder positives Relief trägt, das zur exakten Aufnahme einer sogenannten Splitcastplatte geeignet ist, die wiederum mit ihrem Relief ein Kiefermodell genau reponierbar aufnehmen kann.

Eine weitere besonders bevorzugte Ausführungsform ist dadurch gekennzeichnet, daß in der Trägerplatte ein Magnet eingelassen ist, der zum Halt der Splitcastplatte dient, wobei diese einen Eisenkern oder ein Eisenplättchen trägt.

Eine weitere besonders bevorzugte Ausführungsform ist dadurch gekennzeichnet, daß an der Trägerplatte ein Haltemechanismus angebracht ist, der einen U-förmigen Ausrichtbogen, bevorzugt aus Rundmaterial, aufnimmt und wobei dieser Rahmen mit seinem Querarm im Haltemechanismus sowohl rotiert als auch seitlich so verfahren werden kann, daß seine parallelen Seitarme symmetrisch auf die Rotationsachse des Artikulators ausgerichtet werden können.

Eine weitere besonders bevorzugte Ausführungsform ist dadurch gekennzeichnet, daß zum schädelbezüglichen Einbau von Kiefermodellen der Ausrichtbogen in seinem Querarm starr fixiert ist und die Seitarme über jeweils ein Gelenk rotierbar und fixierbar angeordnet sind.

Eine weitem besonders bevorzugte Ausführungsform ist dadurch gekennzeichnet, daß aufden Seitarmen des Ausrichtbogens zur genaueren Einstellung auf die Drehachse des Artikulators zusätzliche Markierungsmechanismen angebracht sind, die ggf. mit längenmarkierten Nadeln exakt auf das Rotationszentrum justiert werden können.

Eine weitere besonders bevorzugte Ausführungsform ist dadurch gekennzeichnet, daß zum schädelbezüglichen Einbau von Kiefermodellen die rechtwinkelig angeordneten Seitamme des Ausrichtbogens jeweils einen Markierungsmechanismus aufweisen, der in Richtung der parallel zueinander ausgerichteten Seitarme des Ausrichtbogens verschiebbar und arretierbar ist.

Eine weitere besonders bevorzugte Ausführungsform ist dadurch gekennzeichnet, daß zum schädelbezüglichen Einbau von Kiefermodellen der Markierungsmechanismus bei z. B. vierkant-profilförmigen Seitarmen des Ausrichtbogens als Schlitten geformt ist, der über eine Fixationsschraube arretierbar ist und rechtwinkelig zu seiner Laufrichtung verschiebbar eine Nadel aufnimmt, die bevorzugt mit Federvorspannung exakt horizontal und reproduzierbar auf das Rotationszentrum des jeweiligen Artikulators ausrichtbar ist.

Eineweitere besonders bevorzugte Ausführungsform ist dadurch gekennzeichnet, daß die Modellplatte zur sicheren Reponierbarkeit abgenommener Kiefermodelle ein positives oder negatives Relief (Splitcastrelief) trägt.

Bei einer weiteren besonders bevorzugten Ausführungsform ist in der Modellplatte ein Magnet in einem Eiseneinsatz herausnehmbar eingelassen. Der Halt des plazierten Modelles erfolgt über ein Eisenplättchen das dort zuvor eingegipst wurde.

Eine weitere besonders bevorzugte Ausführungsform ist dadurch gekennzeichnet, daß in der Modellplatte eine Eisenplatte eingearbeitet ist, die den Boden einer Magnetaufnahme bildet und mit dem eingebrachten Magneten, der über einen Klebespalt von einem Eisenring umgeben ist, ein lösbares Magnettopfsystem bildet, wobei der Eisenring zur Eisenplatte eine Phase aufweist, die mit einer entsprechenden Phase der Magnetaufnahme korrespondiert und damit eine Lagedefinition des Magneten gewährleistet und sein Herauslösen aus der Magnetaufnahme der Modellplatte dadurch ermöglicht, daß ein mit Haltegriff versehener Eisenkem auf die Magnetseite ohne Phase des Eisenringes aufgesetzt eine erhöhte Haftkraft bewirkt.

Bei einer ebenfalls bevorzugten Ausführungsform ist ein Eisenkern in die Modellplatte eingelassen, hier wird ein Magnet im Modell eingegipst.

Eine weitere besonders bevorzugte Ausföhrungsform ist dadurch gekennzeichnet, daß die Modellplatte auf der dem Modell gegenübertiegenden Seite überstehende positive Retentionen wie Zapfen, Gewinde mit Schrauben oder ähnliches oder negative und untersichgehende Retentionselemente wie Aussparungen oder Einfräsungen für das Verbindungsmedium zwischen Modellplatte und Artikulatorbasisplatte aufweist.

Eine weitere besonders bevorzugte Ausführungsform ist dadurch gekennzeichnet, daß zur Retention für das Verbindungsmedium Schrauben benutzt werden, die bevorzugt als Senkkopfschrauben durch die Modellplatte geführt und auf der, dem Modell gegenüberliegenden Seite mit untersichgehenden Muttern verbunden werden und auf diese Weise eine Trennung der Modellplatte aus dem Verbund ertauben, wobei die Modellplatten auf der, dem Modell gegenüberliegenden Seite mit Führungswülsten oder Aussparungen versehen sind, die eine sichere Reposition in den Verbund gestatten.

Eine weitere besonders bevorzugte Ausführungsform ist dadurch gekennzeichnet, daß die Artikulatormontageplatte im Zentralbereich durch Gewinde und Einfräsungen auf den jeweiligen Artikulatortyp abgestimmt ist.

Eine weitere besonders bevorzugte Ausführungsform ist dadurch gekennzeichnet, daß auch die Artikulatormontageplatte, versetzt von den artikulatorspezifischen Gewinde und Fräsungen, Retentionsstellen für das Verbindungsmedium aufweist, die zur Modellseite als untersichgehende Aussparungen oder konische Durchbohrungen vorliegen und die so angeordnet sind, daß die Retentionselemente der Modellplatte störungsfrei in diese eingreifen, und daß auch bei einer erforderlichen räumlichen Veränderung der Modellplatte keine Beeinflussung der Retentionselemente stattfindet.

Eine weitem besonders bevorzugte Ausführungsform ist dadurch gekennzeichnet, daß die Artikulatormontageplatte in verschiedenen Stärken zur Verfügung steht, oder daß zur räumlichen Distanzüberbrückung zwischen Modellplatte und Artikulatormontageplatte Distanzplatten oder Rahmen Verwendung finden, die die Verbindungsfuge minimieren.

Eine weitere besonders bevorzugte Ausführungsform ist dadurch gekennzeichnet, daß zur Bestimmung der imaginären Rotationsachse von Arcon-Artikulatoren, die als künstliche Kiefergelenksköpfe auf den Artikulatorsäulen jeweils eine Kugelkalotte aufweisen, wobei die besagte Rotationsachse durch das Zentrum der Kugel verläuft, ein Hilfsmechanisums verwendet wird, der über eine Querverbindung zwei gegenüberliegend montierte Schraubenelemente besitzt, die exakt aufein ander fluchten und so gestaltetsind, daß sie zur Auflage der Gelenkkugel negativ konisch oder kalottenförmig ausgefräst sind, über ein Gewindeanteil und Führunganteile in ihrer Längsrichtung variierbar und auf der Querverbindung verfahrbar montiert sind, und an ihrer Außenseite punktförmig das Drahzentrum der Rotationsachse anzeigen.

Anhand den beigefügten Zeichnungen, die besonders bevorzugte Ausführungsbeispiele der Erfindung zeigen, wird diese nun näher erläutert.
Dabei zeigen:
Figur 1 eine perspektivische Darstellung der erfindungsgemäßen Vorrichtung auf einem herkömmlichen Artikulatormodell;
Figur 2 eine Seitenansicht der montierten erfindungsgemäßen Vorrichtung im Artikulator 2;
Figur 3 eine Draufsicht auf die Artikulatorbasisplatte 9;
Figur 4 eine Draufsicht auf die Grundplatte 15 von der, der Artikulatorbasisplatte 9 gegenüberliegenden Seite, wobei die Position einer montierten Hülse 18 oder eines montierten Rundstabes 19 nur skizziert wurde;
Figur 5 eine Seitenansicht der erfindungsgemäßen Vorrichtung, wobei auf der Grundplatte 15 eine Hülse 18 mit Feststellschraube 20 sowie ein vertikal verfahrbarer Stabeinsatz 19 montiert ist und die damit verbundene Trägerplatte 10 exakt reponiert eine Splitcastplatte 1 trägt;
Figur 5a eine Variante dieser Ausführungsform, wobei auf der Grundplatte 15 ein Rundstab 19 montiert wurde und eine entsprechende Hülse 18 mit Feststellschraube 20 verfahrbar angeordnet ist; auch hier ist die montierte Trägerplatte 10 mit einer Splitcastplatte 1 verbunden;
Figur 6 eine Draufsicht auf die Trägerplatte 10 mit ihrem, mit der aufgesetzten Splitcastplatte 1 korrespondierenden Relief 32 sowie mit einem zentral eingelassenen Eisenkern oder Eisenplättchen 21;
Figur 7 eine Detailansicht des Ausrichtbogens 11 mit fixiertem Querarm 25 und einem Seitarm 26, auf dem der Markierungsmechanisums 12 zum Ausrichten auf die Schamierachse 6 des Artikulators 2 aufgeschoben und fixiert ist;
Figur 7a eine Detailansicht des Markierungsmechanismus 12 des Ausrichtbogens 11 von vom;
Figur 8 eine perspektivische Darstellung eines Teiles der erfindungsgemäßen Vorrichtung ohne Artikulator 2;
Figur 9 eine Seitenansicht der Vorrichtung auf einem herkömmlichen Artikulatomodell 2;
Figur 10 die Splitcastplatte 1 von der Modellseite;
Figur 11 die Splitcastplatte 1 von der Artikulatorseite;
Figur 12 die Artikulatorbasisplatte von der Modellseite;
Figur 13 einen Querschnitt durch die montierte Vorrichtung mit eingebrachtem Haltemedium 5;
Figur 14 an zwei skizzierten Artikulatoren die wichtigen Minimalabstände;
Figur 15 an zwei skizzierten Artikulatoren den Einsatz eines Zentrikblockes zum Einbau der Unterkiefer-Splitcastplatten bei einjustierten Oberkiefer-Splitcastplatten;
Figur 16 eine Draufsicht auf die Artikulatorbasisplatte 9 mit Führungsrelief 41, parallel zu den artikulatorspezifischen Gewinde 27 und Fräsungen 28;
Figur 17 eine Draufsicht auf die Grundplatte 15 von der, der Artikulatorbasisplatte 9 gegenüberliegenden Seite, wobei die Position einer montierten Führungshülse 18 skizziert ist;
Figur 18 die Artikulatorbasisplatte und
Figur 19 die Grundplatte 15 in jeweils weiteren Ausführungsformen;
Figur 20 eine Draufsicht auf die Splitcastplatte 1 mit integrierten Magneten und Senkkopfschrauben zur Retensionsverbindung mit der Montageplatte von der Modellseite;
Figur 21 eine Detailansicht des lösbaren Magnettopfsystems;
Figur 22 eine Draufsicht auf die Modellplatte von der Artikulatorseite;
Figur 23 eine Draufsicht auf eine Variante der Montageplatte von der Modellseite aus betrachtet;
Figur 24 eine Detailansicht der Verbindung Modellplatte/Montageplatte über Senkkopfschraube und Retentionsmutter und einem Verbindungsmedium im Schnitt;
Figur 25 eine Draufsicht auf die Trägerplatte mit montiertem Ausrichtbogen;
Figur 26 eine Seitenansicht von Figur 27 mit rotierbar und arretierbar angeordnetem Vierkantseitarm und Markierungsmechanismus;
Figur 27 eine Detailansicht des Markierungsmechanismus mit Federspannung der Markietungsnadel;
Figur 28 eine perspektivische Darstellung des Hilfsmechanismus zum Auffinden der Schamierachse bei Arcon-Artikulatoren;
Figur 29 eine weitere Ausführungsform der auf der Artikulatorbasisplatte 9 bzw. auf der Grundplatte 15 angeordneten Hülse 18 und Rundstab 19;
Figur 30 die zur räumlichen Distanzüberwindung zwischen Splitcastplatte 1 und Artikulatormontageplatte 4 fungierenden Distanzplatter 52 oder Rahmen 53, die die Verbindungsfugen 54 für das Verbindungsmedium 5 minimieren.

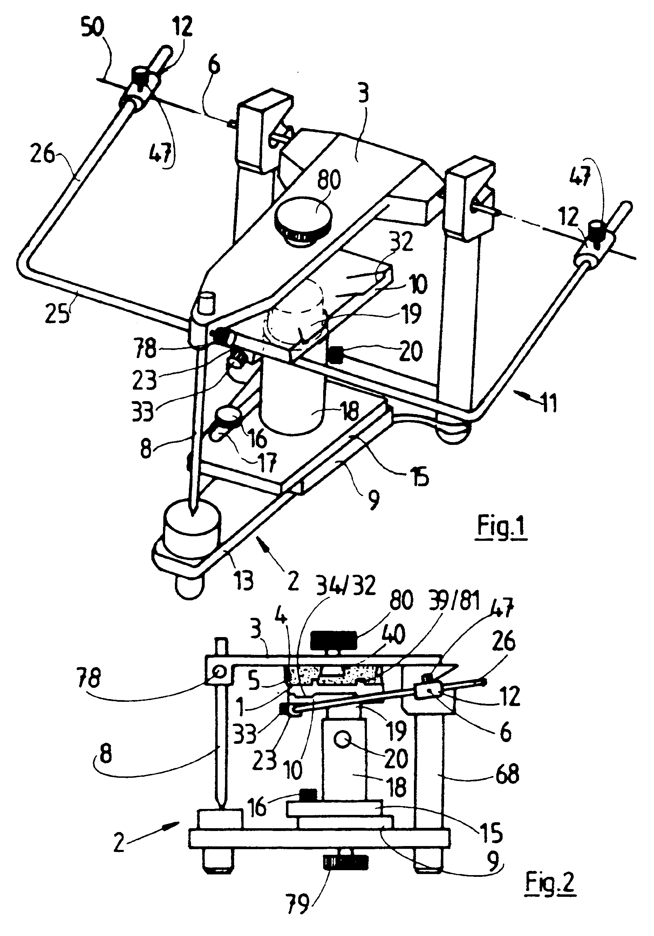

Figur 1 zeigt eine perspektivische Darstellung der erfindungsgemäßen Vorrichtung in einem herkömmlichen Artikulator 2, wobei die Trägerplatte 10 transparent dargestellt wurde und das negative Splitcastrelief 32 nur angedeutet wurde. Die Artikulatorbasisplatte 9 ist montiert, die Grundplatte 15 wurde über die Fixationsschraube 16 arretiert, wobei verdeutlicht ist, daß in diesem speziellen Fall die Grundplatte 15 über ein Langloch 17 nach anterior (vorne) verschoben werden mußte. Auf der Grundplatte 15 ist das Rohr 18 montiert, der Rundstab 19 ist mit montierter Tragerplatte 10 über die Fixationsschraube 20 festgestellt, Der Ausrichtbogen 11 ist mit seinem Querarm 25 über das Halteelement 23, das fest mit der Trägerplatte 10 verbunden ist, über die Fixationsschraube 33 nach Seitewegung und Rotation in der Führung 24 des Halteelementes 23 so ausgerichtet, daß die Markierungsmechanismen 12 des Ausrichtbogens 11 beidseits symmetrisch und in gleichem Abstand auf die Rotationsachse 6 des Artikulators 2 deuten.

Dabei wird der Incisalstift 8 des Artikulators 2 durch die Fixationsschraube 78 in vertikale -O-Stellung gebracht. In einer bevorzugten Auführungsform wird das Einstellen der Markierungsmechanismen 12 des Ausrichtbogens 11 durch Nadeln 50 erleichtert, die zur symmetrischen Einstellung eine Graduierung aufweisen. Die anteriore Position der Grundplatte 15 wurde in diesem Falle erforderlich, da die schädelbezügliche Oberkiefertage, die von einem anderen Artikulatortyp abgegriffen wurde, auf den hier vorliegenden Artikulatortyp 2 übertragen werden soll.

Figur 2 zeigt eine Seitenansicht der erfindungsgemäßen Vorrichtung. Artikulatorbasisplatte 9 ist über Fixationsschraube 79 des Artikulators 2 montiert. Die Grundplatte 15 liegt im dargestellten Fall nach anterior verschoben vor und ist über Fixationsschraube 16 arretiert Durch die Stellung von Rundstab 19 in Rohr 18 und die beschriebene anteriore Lage der Grundplatte 15 ist der Markierungsmechanismus 12 des Ausrichtbogens 11 beidseits symmetrisch auf das Rotationszentrum 6 des Artikulators 2 ausgerichtet. Die Figur 2 verdeutlicht darüber hinaus den Einbau der Splitcastplatte 1 um den Artikulator 2 im Hinblick auf schädelbezüglichen Oberkiefereinbau mit einem anderen Artikulatortyp gleichzuschalten. Die Abbildung zeigt wie Splitcastplatte 1 mit ihrem Relief 34 exakt in das Relief 32 der Trägerplatte 10 einrastet und wie, in der erreichten Position die Verbindung zwischen Splitcastplatte 1 und Oberkiefer-Artikulatormontageplatte 4, die durch Fixationsschraube 80 in Artikulator vormontiert wurde, hergestellt wird.

Als Verbindungsmedium 5 wird bevorzugt Gips, Kunststoff oder anderes verwendet. Die Retention erfolgt über Retentionszapfen 39 der Splitcastplatte 1 und Unterschnitte 40 der Oberkiefermontageplatte 4.

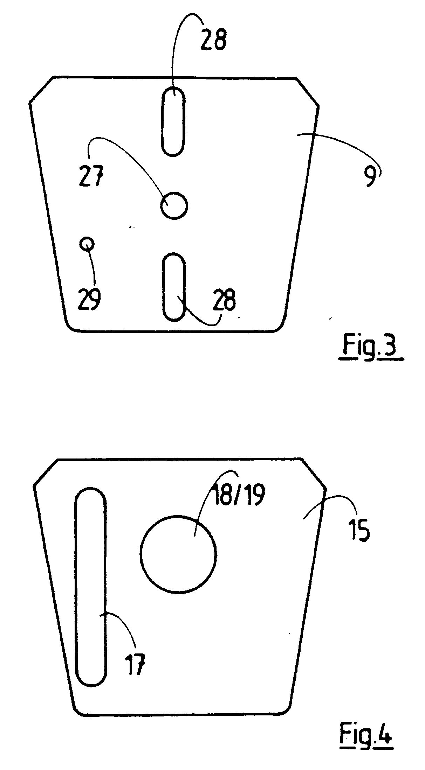

Figur 3 zeigt eine Draufsicht der Artikulatorbasisplatte 9, in der ein artikulatorspezifisches Gewinde 27 und artikulatorspezifische Einfräsungen 28 zur Montage im jeweiligen Artikulator dienen. Gewindebohrung 29 nimmt dabei die Arretierungsschraube 16 zur Verstellung der Grundplatte 15 auf.

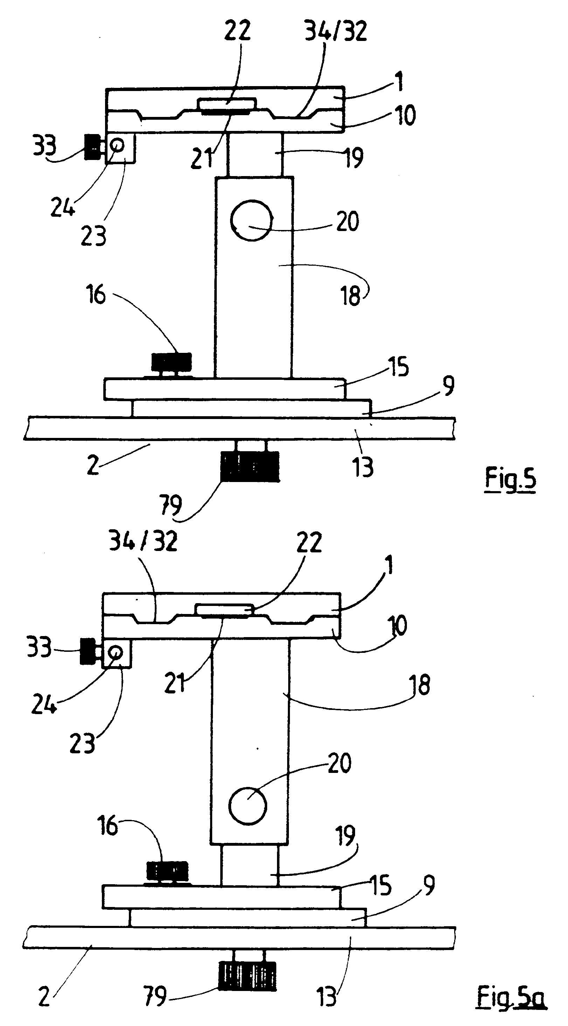

Figur 4 zeigt eine Draufsicht auf die Grundplatte 15, wobei das Langloch 17 die Verfahrbarkeit der Grundplatte 15 zur Artikulatorbasisplatte 9 erlaubt, wobei gleichzeitig der Durchmesser des Langloches 17 so gewählt wurde, daß bei gelöster Fixationsschraube 16 auch eine geringe körperliche Seitbewegung der Grundplatte 15 ermöglicht wird. Die Position von Rohr 18 oder Rundstab 19 ist nur angedeutet.

Die Figur 5 zeigt eine Seitenansicht der erfindungsgemäßen Vorrichtung, wobei der Artikulator 2 mit der Fixationsschraube 79 nur im Ausschnitt sichtbar ist. Auch hier kommt die nach anterior verschobene Lage der Grundplatte 15 gegenüber der Artikulatorbasisplatte 9 mit der Arretierungsschraube 16 zur Darstellung. Der Rundstab 19 wurde im Rohr 18 durch die Fixationsschraube 20 festgestellt. Auf der Trägerplatte 10 greift bündig die Splitcastplatte 1 ein, wobei in diesem bevorzugten Ausführungsbeispiel der gegenseitige Halt der Platten über Eisenplättchen 21 in der Trägerplatte 10 und dem Magnet 22 in der Splitcastplatte 1 gewährleistet ist, Die umgekehrte Variante, daß der Magnet 22 in der Trägerplatte 10 verankert ist und umgekehrt die Splitcastplatte 1 einen Eisenkem trägt, wurde nicht dargestellt.

Figur 5 zeigt darüber hinaus das befestigte Halteelement 23, das in seiner Führung 24 den Ausrichtbogen 11 mit seinem Querarm 25 aufnimmt.

Figur 5a zeigt eine Variante der zuvor beschriebenen erfindungsgemäßen Vorrichtung, wobei als Alternative ein Rundstab 19 auf der Grundplatte 15 montiert vorliegt und die Hülse 18 vertikal und axial verfahrbar und durch die Fixationsschraube 20 feststellbar ist.

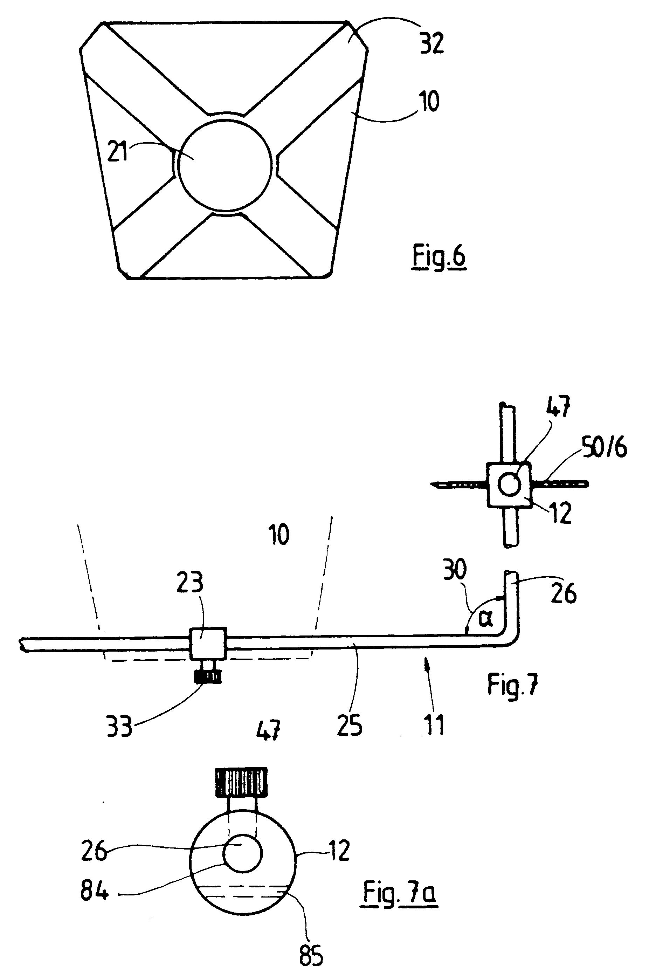

Figur 6 zeigt eine Draufsicht aufdie Trägerplatte 10, die hier im Zentralbereich ein Eisenplättchen 21 trägt und mit dem negativen Splitcastrelief 32 zur exakten Reposition der Splitcastplatte über das Splitcastrelief 34 geeignet ist,

Figur 7 zeigt in Detailansicht den Ausrichtbogen 11, der durch die Fixationsschraube 33 im Halteelement 23 arretiert ist.
Die Trägerplatte 10 wurde in der Zeichnung durch eine Strichmarkierung symbolisiert. Gleichzeitig zeigt Figur 7 eine Draufsicht aufden Markierungsmechanismus 12, der durch die Fixationsschraube 47 am Ausrichtbogen 11 arretiert wurde und der in einer bevorzugten Ausführung eine Markierungsnadel 50 aufnimmt, die zur symmetrischen Einstellung eine Graduierung aufweist.

Figur 7a zeigt als Detail den Markierungsmechanismus 12 von vom, wobei über die Fixationsschraube 47 der Markierungsmechanismus 12 am Seitarm 26 des Ausrichtbogens 11 arretiert wird.
Unterhalb der Bohrung 84 zur Aufnahme des Seitarmes 26 des Ausrichtbogens 11 kommt die Bohrung 85 zur Darstellung, die die Markierungsnadel 50 führt.

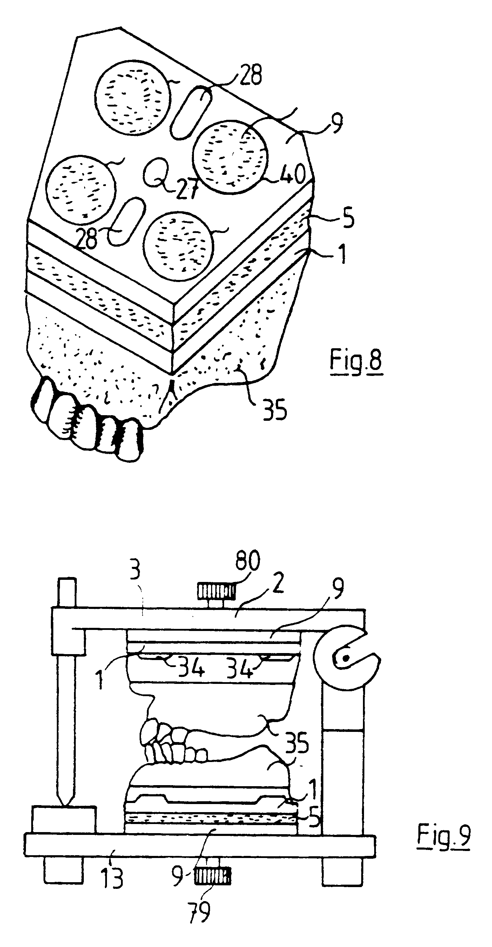

Figur 8 zeigt eine perspektivische Darstellung der erfindungsgemäßen Vorrichtung zur Verdeutlichung ohne Artikulator 2. Das zentrale Gewinde 27 dient zur Verschraubung im Artikulator 2 durch die Fixationsschraube 80, die Einfräsungen 28 fixieren die Artikulatorbasisplatte 9 drehstabil im Gerät. In den konischen Durchbohrungen 40, die zur Artikulatorseite den kleineren Durchmesser aufweisen, ist das Haltemedium (Gips, Kunststoff oder anderes) 5 sichtbar. Dieses Haltemedium 5 kommt ebenfalls zwischen der Artikulatorbasisplatte 9 und der Splitcastplatte 1 zur Darstellung. Der Splitcastplatte 1 ist ein Kiefernodell 35 aufgesetzt.

Figur 9 zeigt eine Seitenansicht der montierten Vorrichtung aufeinem herkömmlichen Artikulatormodell 2. Die Artikulatorbasisplatte 9 ist mittels einer Fixationsschraube 80/79 im Artikulator 2 montiert, Das Haltemedium 5 fixiert die Splitcastplatte 1 an der Artikulatorbasisplatte 9. Das Modell 35 ist der Splitcastplatte 1 aufgesetzt. Figur 9 verdeutlicht die Verhältnisse sowohl im Bereich des Oberkiefer-3 als auch im Bereich des Untekiefer-13-Artikulatorarmes.

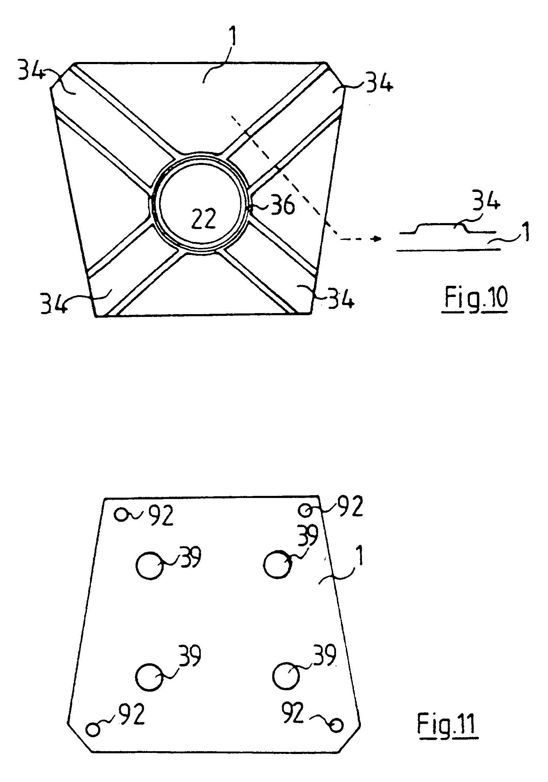

Figur 10 zeigt die Splitcastplatte 1 von der Modellseite. Ein negatives oder positives Relief (Splitcastrelief) 34 garantiert dabei exaktes Reponieren entfernter Gipsmodelle 35. Der Halt dieser Gipsmodelle 35 wird über einen Magneten 22 gewährleistet, der in der Splitcastplatte 1 über einen Eiseneinsatz 36 durch eigene Magnetkraft herausnehmbar fixiert ist,

Figur 11 zeigt die Splitcastplatte 1 von der Artikulatorseite. Dabei sind Retentionselemente 39, wie Zapfen, Gewinde oder Schrauben oder untersichgehende Aussparungen erkennbar. Weiterhin sind Retentionselemente 92 sichtbar, die in der Ausgangsposition exakt in korrespondierenden Retentionselemente 93 der Artikulatorbasisplatte 9 eingreifen. Die Retentionselemente 39 liegen in der Ausgangsposition bevorzugt zentrisch in den Retentionsaussparungen 40 der Artikulatorbasisplatte 9.

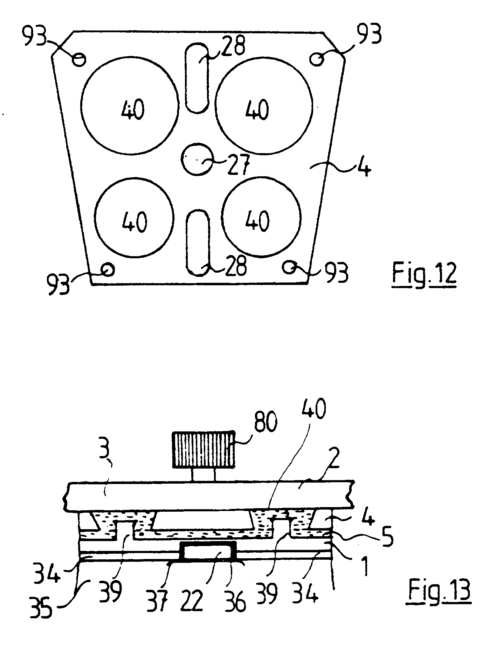

Figur 12 zeigt die Artikulatorbasisplatte 9 von der Modellseite. Das artikulatorspezifische Gewinde 27 und die artikulatorspezifischen Fräsungen 28 können als Durchbohrungen oder Durchfräsungen sichtbar sein.

Die bevorzugten konischen Retentions-Aussparungen 40 zur Aufnahme des Verbindungsmediums 5 bzw. zum Eingreifen der Retentionszapfen 39 weisen zur Modellseite den kleineren Durchmesser auf. Darüber hinaus erkennt man die Retentionselemente 93, die in der Ausgangsposition exakt in die korrespondierenden Retentionselemente 92 der Splitcastplatte 1 eingreifen.

Figur 13 zeigt einen Querschnitt durch den montierten Bausatz. Im Artikulator 2 ist über die Halteschraube 80 die Artikulatormontageplatte 4 montiert Der Querschnitt eröffnet, von der Halteschraube 80 verschoben, die Retentionsaussparungen 40, in die Retentionszapfen 39 der Splitcastplatte 1 eingreifen, wobei das Haltemedium 5 die Splitcastplatte 1 an die Artikulatormontageplatte 4 fixiert Das Relief 34 dient zur Positionierung des Modelles 35, das über ein eingegipstes Eisenplättchen 37 am Magneten 22 der Splitcastplatte 1 haftet. Der Halt des Magneten 22 zur Splitcastplatte 1 selbst ist wiederum über einen Eiseneinsatz 36 gewährleistet.

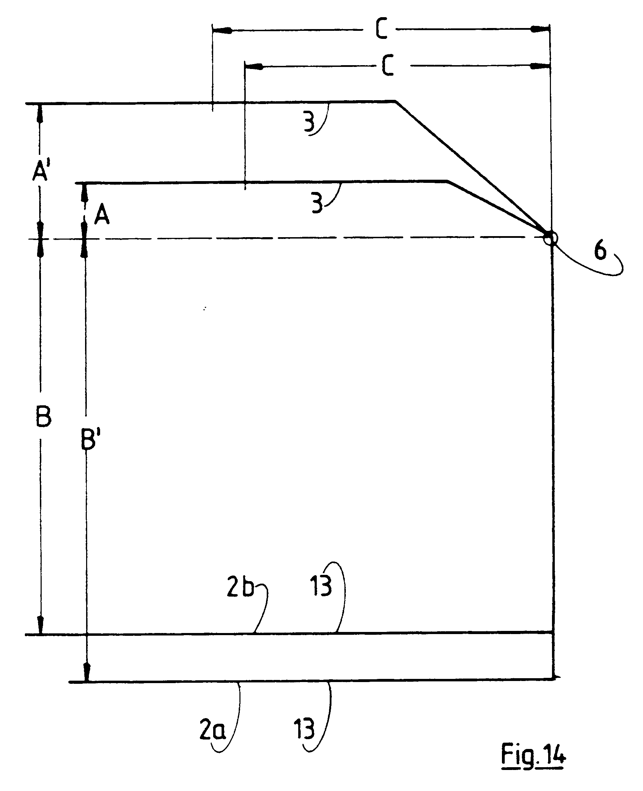

Figur 14 deutet zwei skizzierte Artikulatoren 2a, 2b unterschiedlicher Bauhöhe an, wobei mit A, A' der Abstand des Artikulator-Oberkieferarmes 3 eines Artikulators 2a, 2b zur übereinanderprojezierten Rotationsachse 6 der beiden Geräte darstellt, während B, B' den Abstand des Artikulator-Unterkieferarmes 13 eines Gerätes zur gemeinsamen Rotationsachse 6 aufzeigt.

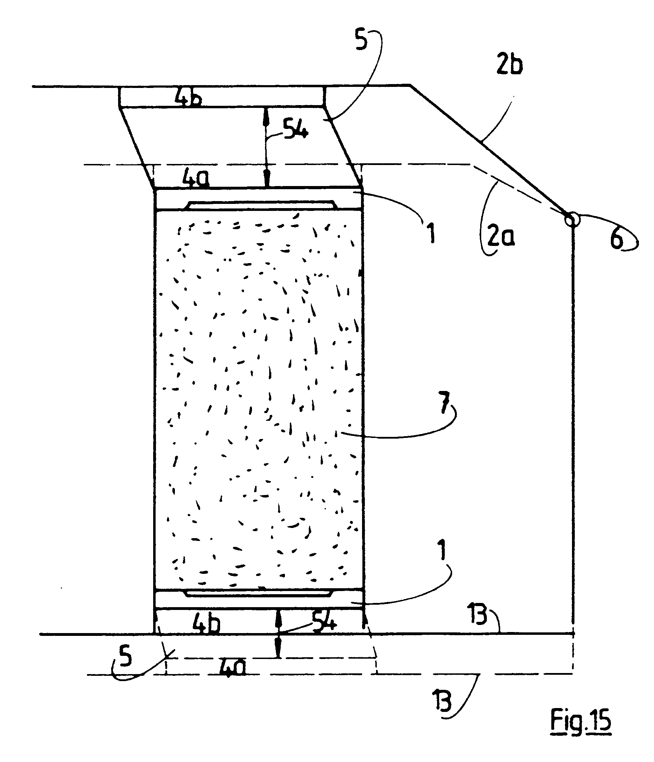

Figur 15 zeigt an zwei skizzierten Artikulatoren 2a, 2b den Einsatz eines Zentrikblockes 7 zum Einbau der Unterkiefersplitcastplatten 1. Beide Artikulatoren 2a, 2b tragen in Übereinanderprojektion ihre jeweilige Oberkiefersplitcastplatte 1 in identischer räumlicher Beziehung zur jeweiligen Rotationsachse 6, in dem sie über das Zwischenmedium 5 mit ihrer jeweiligen Montageplatte 4 verbunden sind.

Der Zentrikblock 7 dient zum Einbau der Unterkiefersplitcastplatte 1, wobei zuerst die Montage beim Kleinstabstand B (siehe Figur 14) vom Artikulator-Unterkieferarm 13 zur Rotationsachse 6 durchgeführt wurde und anschließend über das Verbindungsmedium 5 die Montage der Unterkiefersplitcastplatte 1 des zweiten Artrikulators 2a mit seiner entsprechenden Montageplatte 4a durchgeführt wurde.

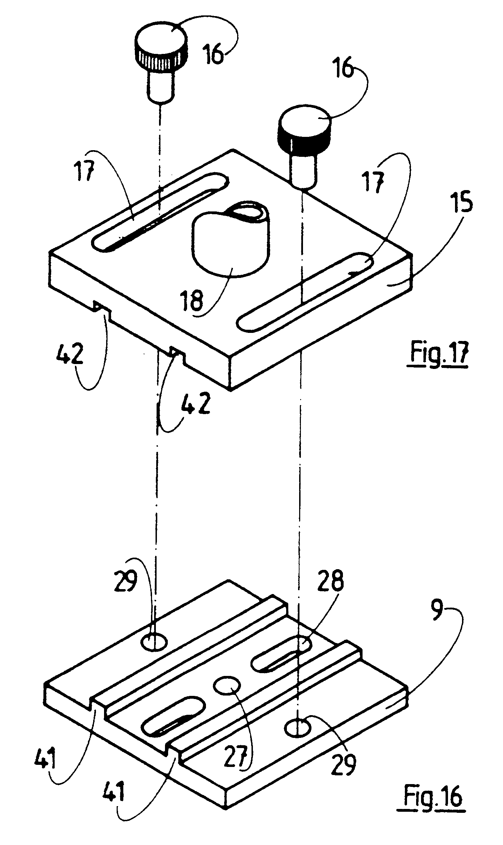

Figur 16 zeigt eine Draufsicht auf eine anders ausgeführte Artikulatorbasisplatte 9, wobei hier ein Führungsrelief 41 parallel zum artikulatorspezifischen Gewinde 27 und den Fräsungen 28 angebracht wurde, das zur Führung der Grundplatte 15 in sagittaler Richtung dient Gleichzeitig wird deutlich, daß zur sicheren Arretierung der Grundplatte hier symmetrisch zwei Gewindebohrungen 29 angebracht wurden.

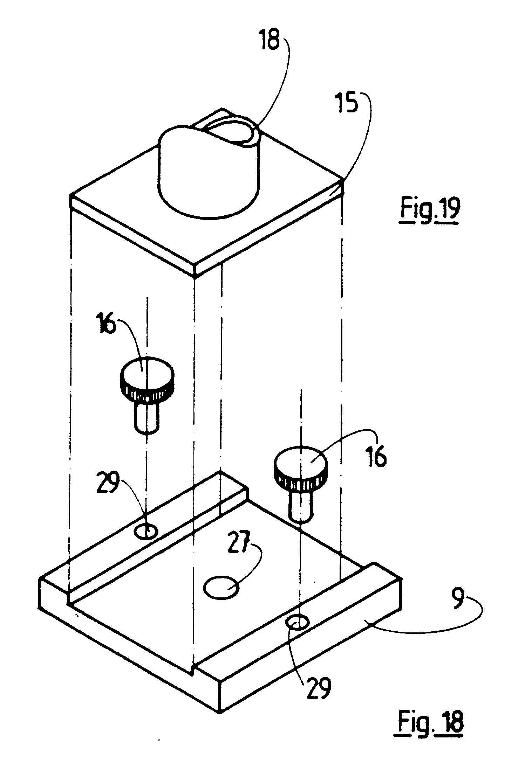

Figur 17 zeigt eine Draufsicht aufdie Grundplatte 15 von der der Artikulatorbasisplatte 9 gegenüberliegenden Seite, wobei die Position einermontierten Föhrungshülse 18 skizziert ist. In der dargestellten Ausführungsform wird die sagittale Bewegungsführung der Grundplatte durch ein Führungsrelief 42 gewährleistet, das mit dem Führungsrelief 41 der Artikulatorbasisplatte 9 korrespondiert Die sagittale Bewegung selbst wird im dargestellten Falle über zwei Langlöcher 17 begrenzt, durch die zwei Arretierungsschrauben 16 in die Gewindebohrungen 29 der Attikulatorbasisplatte 9 eingreifen und die Grundplatte 15 arretieren.

Die Figuren 18 und 19 zeigen eine weitere Variante der Artikulatorbasisplatte 9 und der entsprechend ausgeführten Grundplatte 15. In diesem Ausführungsbeispiel ist die Artikulatorbasisplatte 9 U-förmig ausgebildet und die Grundplatte 15 entsprechend der Artikulatorbasisplatte 9 derart ausgeführt, daß diese innerhalb der U-Form geführt wird. Die Arretierung erfolgt über die beidseitig angeordneten Schrauben 16.

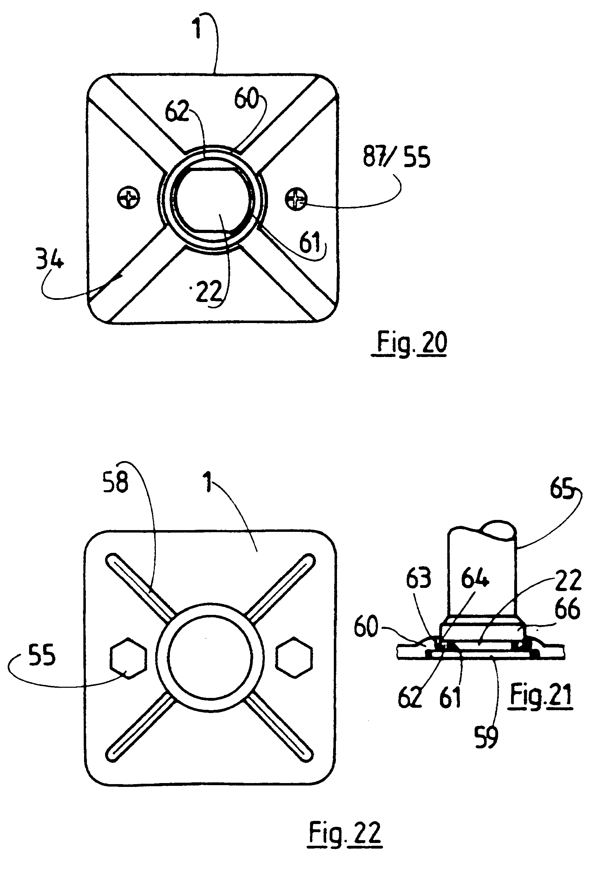

Figur 20 zeigt eine Draufsicht auf die Splitcastplatte 1 mit hier kreuzförmig angeordneten positiven Fühtungswülsten 34, die auf dem aufgesetzten Modell 35 ein entsprechendes Splitcastrelief abzeichnen und dem Modell 35 zur exakten Reponierbarkeit und Lagestabilität dienen. Zentral ist in der dargestellten Ausführungsform in der Magnetaufnahme 60 der Splitcastplatte 1 ein Magnet 22 mit Eisenring 62 integriert, wobei die Verbindung Magnet 22 zu Eisenring 62 über einen Kunststoffklebespalt 61 bewerkstelligt ist Es ist hervorzuheben, daß der Magnet 22 in der dargestellten Form in der Magnetaufnahme 60 unter Niveau angeordnet ist, so daß beim Abziehen eines aufgesetzten Modelles 35 das zum Modellhalt ein Eisenplättchen 37 trägt, der Magnet 22 in seiner Magnetaufnahme 60 dadurch verbleibt, daß der Boden der Magnetaufnahme 60 in der Splitcastplatte 1 als Eisenplattchen 59 ausgebildet ist, dem er direkt aufliegt und auf diese Weise ein lösbares Magnettopfsystem bildet, wahrend er zum Eisenplättchen 37 des Modelles 35 in Distanz angeordnet ist, so daß der magnetische Fluß hier eine Abschwächung erfahrt. Die Splitcastplatte 1 zeigt weiterhin im dargestellten Fall symmetrisch angeordnete Durchbohrungen 87 zur Aufnahme von bevorzugt Senkkopfschrauben 55, die mit rückseitig angeordneten untersichgehenden Muttern 56 Retentionsstellen für das Verbindungsmedium 5 bilden.

Figur 21 erläutert noch einmal in Detailansicht das lösbare Magnettopfsystem, wobei im Seitenschnitt erkennbar ist, daß der Magnet 22 über einen Klebespalt 61 mit einem Eisenring 62 umgeben ist, der eine Phase 63 aufweist und auf einem Eisenplattchen 59 aufliegt, das in einer entsprechenden Aufnahme in die Splitcastplatte 1 integriert ist Die Phase 64 des Magneten 22 wiederum korrespondiert mit einerentsprechenden Phase der Magnetaufnahme 60 der Splitcastplatte 1, so daß der Magnet 22 nicht mit der falschen Seite in der Magnetaufnahme positioniert werden kann. Die Abbildung 21 verdeutlicht weiterhin, wie das Entfernen des Magneten 22 aus der Magnetaufnahme 60 durchgeführt wird. Der über dem Magnettopfsystem dargestellte Magnetheber 65 wird mit seinem Eisenkern 66, der im Außendurchmesser dem Eisenring 62 entspricht, dem Magneten 22 in seiner Magnetaufnahme 60 direkt aufgesetzt, so daß jetzt bedingt durch die Ringphase zum Eisenplättchen 59 nach oben ein erhöhter magnetischer Fluß zustande kommt und dadurch das Magnettopfsystem lösbar ist.

Figur 22 zeigt eine Draufsicht auf die Splitcastplatte 1 von der Artikulatorseite. Darüberhinaus zeigt diese Ansicht in der dargestellten Form ein negatives Führungsrelief 58, das nach Lösen der Splitcastplatte 1 durch Entfernen der Senkkopfschrauben 55 ein Abnehmen und sicheres Reponieren der Splitcastplatte 1 erlaubt

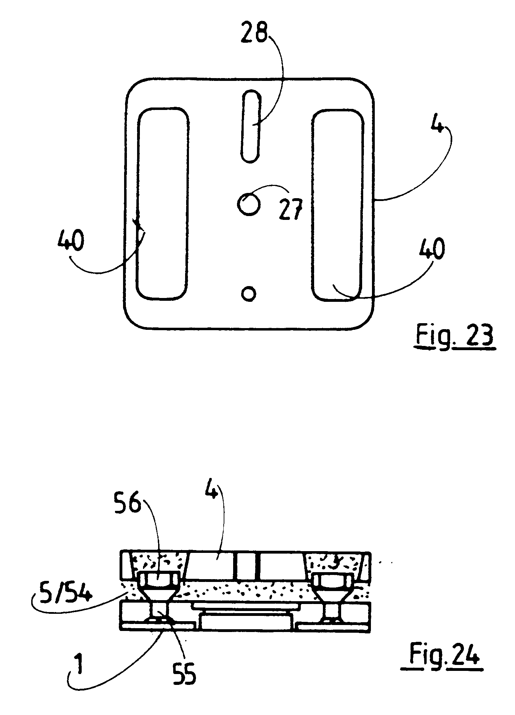

Die Figur 23 zeigt eine Draufsicht auf die Montageplatte 4 von der Splitcastplatte 1 aus betrachtet. Im mittleren Anteil sind die artikulatorspezifischen Fixationsanteile 27, 28 erkennbar. In der dargestellten Form finden sich symmetrisch in sagittaler Richtung angeordnete Retentionen 40 in Form von Langlöchern, die darüber hinaus zur Splitcastplatte 1 einen Unterschnitt bilden, so daß das eingebrachte Verbindungsmedium 5 zur Modellseite im einjustierten Zustand nicht entfernbar ist.

Figur 24 zeigt im Schnitt eine Detailansicht der Verbindungssplitcastplatte 1/Montageplatte 4 über die Senkkopfschrauben 55 und Retentionsmuttern 56 mit einem bevorzugt verwendeten Verbindungsmedium 5.

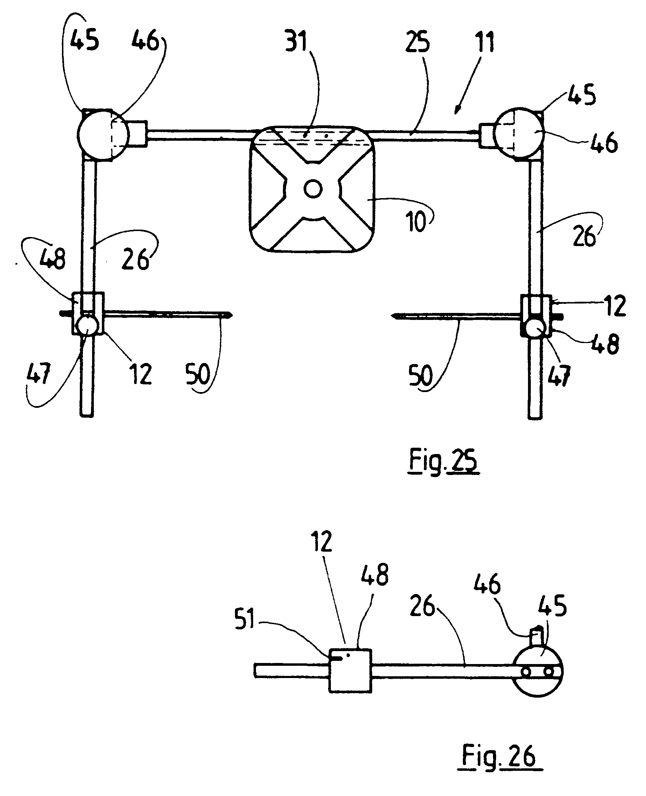

Figur 25 zeigt in einfacher Ausführung eine Draufsicht auf die Trägerplatte 10 mit montiertem Ausrichtbogen 11, der mit seinem Queranteil 25 über die Fixationsschrauben 31 festgestellt ist. Die Figur zeigt weiterhin beidseitig angeordnete rotierbare Seitarme 26 mit Markierungsmechanismen 12, Markierungsnadeln 50 und Fixationsschrauben 47.

Figur 26 zeigt in Seitenansicht ein Detail der Figur 25 mit rotierbar angeordnetem Vierkant-Seitarm 26, wobei hier bevorzugt der Querarm 25 aus Rundmaterial ausgebildet und starr fixiert ist. Die Verbindung des Vierkant-Seitarmes 26 über den Querarm 25 erfolgt über eine Gelenkverbindung 45, die über die Fixationsschraube 46 im einjustierten Zustand festgestellt wird.

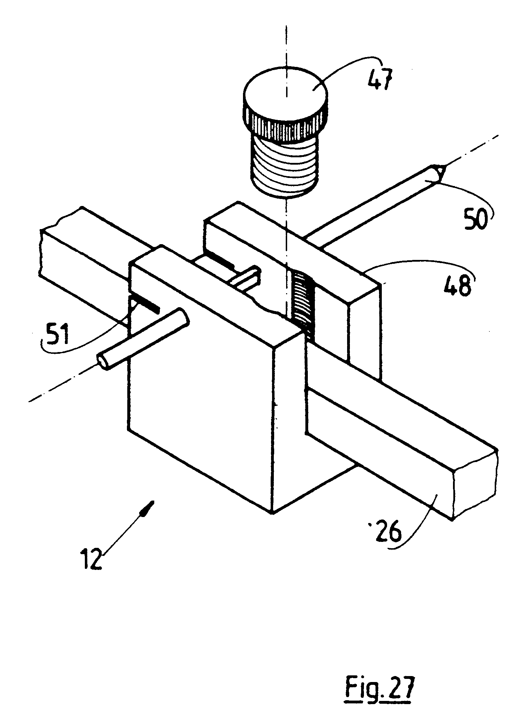

Die Figur 27 zeigt eine Detailansicht des auf dem Vierkant-Seitarm 26 verfahrbaren Markierungsmechanismus 12. Dieser ist schlittenförmig ausgebildet, durch die Fixationsschraube 47 arretierbar und nimmt horizontal und rechtwinkelig zu seiner Laufrichtung Markierungsnadel 50 auf, die zur exakten Horizontaleinstellung unter Federspannung 51 steht.

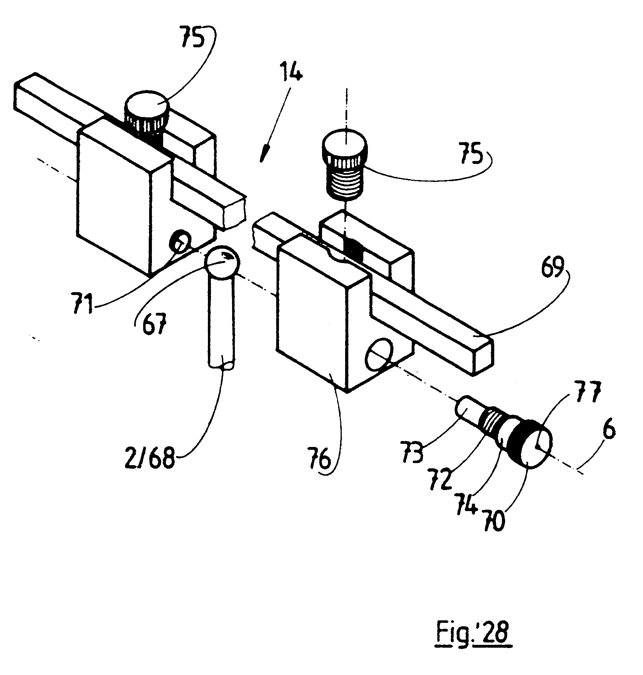

Die Figur 28 zeigt eine perspektivische Darstellung des Hilfsmechanismus 14 zum Auffinden der Scharnierachse 6 bei Arcon-Artikulatoren. Bei diesen Geräten verläuft die imaginäre Rotationsachse durch das Zentrum der künstlichen Kiefergelenksköpfe, die als Kugelkalotten 67 ausgebildet sind (nur eine Kugelkalotte 67 angedeutet). Der Hilfsmechanismus 14 verbindet über eine hierbevorzugtverwendete Vierkantquerverbindung 69 zwei gegenüberliegend montierte Schraubenelemente 70, die exakt aufeinander fluchten und so gestaltet sind, daß sie zur Auflage der Gelenkkugeln im Berührungsbereich negativ konische Ausbuchtungen 71 aufweisen oder kalottenförmig ausgefräst sind, über einen Gewindeanteil 72 und Führungsanteile 73/74 in ihrer Längsrichtung in einem schlittepartig verfahrbaren Profil 76 variierbar montiert sind, das wiederum auf der Querverbindung 69 verfahrbar und über Fixationsschraube 75 arretierbar ist

Desweiteren zeigen die Schraubenelemente an ihrer Außenseite punktförmig (77) das Rotationszentrum 6 an.

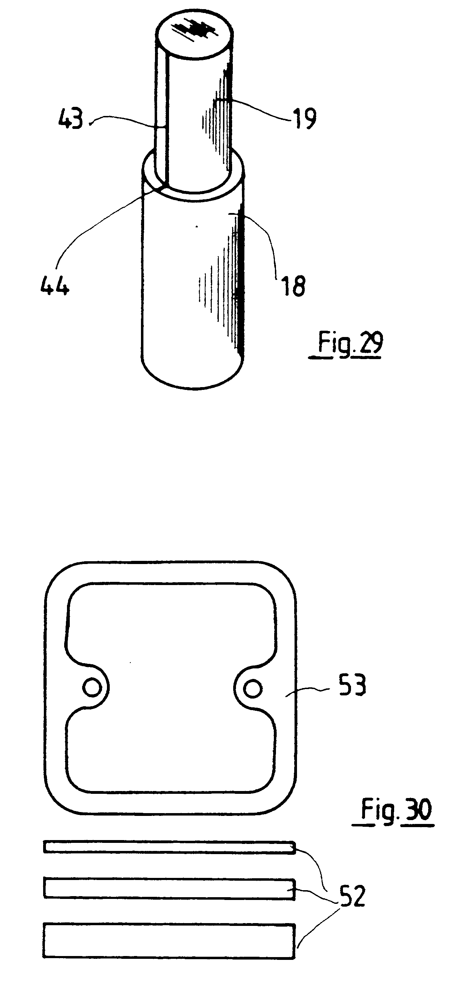

Figur 29 zeigt eine weitere Ausführungsform der auf der Grundplatte 15 angeordneten Hülse 18 mit Rundstab 19.

In diesem Ausführungsbeispiel ist zum schädelbezüglichen Einbau von Kiefermodellen an dem paßgenau gearbeiteten Innenstab 19 oder der Innenhülse 19 in exakt vertikaler Richtung eine Markierung 43 angebracht, die mit einer zweiten Markierung 44 an der Außenhülse 18 korrespondiert und die es ermöglicht, die Drehrichtung bzw. die Position des Innenstabes 19 mit der montierten Trägerplatte 10 bei Einzelanordnung von Hülse 18 und Stab 19 festzulegen.

Figur 30 zeigt die zur räumlichen Distanzüberbrückung zwischen Splitcastplatte 1 und Artikulatormontageplatte 4 fungierenden Distanzplatten 52 oder Rahmen 53, die die Verbindungsfuge 54 für das Verbindungsmedium 5 minimieren.

### Zeichenerklärung

- 1: Splitcastplatte
- 2: Artikulator
- 2a: Ausgangsartikulator
- 2b: Ausgangsartikulator
- 3: Artikulator-Oberkieferarm
- 4: Artikulatormontageplatte
- 5: Verbindungsmedium
- 6: Schamierachse/Rotationsachse
- 7: Zentrikblock
- 8: Incisalstift
- 9: Artikulatorbasisplatte
- 10: Trägerplatte
- 11: Ausrichtbogen
- 12: Markierungsmechanismus
- 13: Artikulator-Unterkieferarm
- 14: Hilfsgerät/Hilfsmechanismus
- 15: Grundplatte
- 16: Schraube
- 17: Langloch
- 18: Hülse/Rohr
- 19: Rundstab/Hülse
- 20: Fixationsschraube
- 21: Eisenplättchen
- 22: Magnet
- 23: Halteelement
- 2: 4 Führung
- 25: Queranteil von 11
- 26: Seitarm von 11
- 27: Gewinde
- 28: Einfräsung
- 29: Gewindebohrung
- 30: Winkel = 90°
- 31: Schraube
- 32: Relief
- 33: Fixationsschraube
- 34: Relief
- 35: Kiefermodell
- 36: Eiseneinsatz
- 37: Eisenplättchen
- 38: Eisenkem (nicht dargestellt)
- 39: Retentionen
- 40: Retentionsstelle/konische Durchbohrung
- 41: Relief
- 42: Relief
- 43: Markierung
- 44: Markierung
- 45: Gelenk
- 46: Schraube
- 47: Schraube
- 48: Schlitten
- 50: Nadel
- 51: Feder
- 52: Distanzplatten
- 53: Rahmen
- 54: Verbindungsfuge
- 55: Schraube
- 56: Mutter
- 57: Führungswülste (nicht dargestellt)
- 58: Aussparung
- 59: Eisenplatte
- 60: Magnetaufnahme
- 61: Klebespalt
- 62: Eisenring
- 63: Phase
- 64: Phase
- 65: Haltegriff
- 66: Eisenkern
- 67: Kugelkalotte
- 68: Artikulatorsäulen
- 69: Quetverbindung
- 70: Schraubenelemente
- 71: Ausbuchtung
- 72: Gewindeanteil
- 73: Führungsanteil
- 74: Führungsanteil
- 75: Fixationsschraube
- 76: Schlitten
- 77: punktförmige Markierung
- 78: Fixationsschraube
- 79: Fixationsschraube
- 80: Fixationsschraube
- 84: Bohrung
- 85: Bohrung
- 87: Durchbohrung
- 88:
- 89:
- 90:
- 91:
- 92: Retentionselemente
- 93: Retentionselemente

## Patentansprüche

1. Verfahren zur scharnierachs- und zentrikbezüglichen Gleichschaltung bauungleicher Artikulatoren mit der Möglichkeit des Austausches von Kiefermodellen, wobei identische und damit zur Kiefermodell-(35)-Umsetzung geeignete Modellträger- oder Splitcastplatten (1), die über aushärtendes Verbindungsmedium (5) jeweils mit einer spezifischen Oberkiefermontageplatte (4) verbunden werden, in bauungleichen Artikulatoren (2) zur schamierachsbezüglichen Gleichschaltung am jeweiligen Artikulator-Oberkieferarm (3) derart mit der spezifischen Oberkiefermontageplatte (4) lösbar fixiert werden, daß bei allen einjustierten Artikulatoren (2) eine übereinstimmende Beziehung ihrer räumlichen Lage zur jeweiligen Scharnierachse (6) gewährleistet ist, indem durch eine artikulatorkompatible Vorrichtung ausgehend von einem Ausgangsartikulator (2a) die Position der Lage der Oberkiefer-Splitcastplatte (1), die hier in horizontaler und vertikaler Richtung willkürlich aber bevorzugt in optimierter Beziehung zur Scharnierachse (6) eingebaut ist, abgegriffen und durch Horizontal- und Vertikalbewegung den Scharnierachsen (6) gleichzuschaltender Artikulatoren (2) angeglichen wird, und wobei die zentrikbezügliche Gleichschaltung durch identische räumliche Zuordnung einer zweiten, bevorzugt gleichen Splitcastplatte (1) durch Verwendung eines sogenannten Zentrikblockes (7) erfolgt, mit dessen Hilfe die korrekte Verbindung der zweiten Splitcastplatte (1) mit der Unterkiefermontageplatte (4) des jeweiligen Artikulators (2) über das aushärtende Verbindungsmedium (5) erfolgt.

2. Verfahren zur scharnierachs- und zentrikbezüglichen Gleichschaltung bauungleicher Artikulatoren mit der Möglichkeit des Austausches von Kiefermodellen nach Anspruch 1, wobei
als Ausgangsartikulator (2a) das Gerät mit dem vertikalen Minimalabstand A vom Artikulator-Oberkieferarm (3) zur Scharnierachse (6) bei incisalstift-(8)-Einstellung-O-Verwendung findet.

3. Verfahren zur scharnierach-und zentrikbezüglichen Gleichschaltung bauungleicher Artikulatoren mit der Möglichkeit des Austausches von Kiefermodellen nach Anspruch 1 - 2, wobei
im Ausgangsartikulator (2a) die Oberkiefer-Splitcastplatte (1) bei Incisalstift-Einstellung-O bevorzugt horizontal an der entsprechenden Artikulatormontageplatte (4) lösbar fixiert wird.

4. Verfahren zur scharnierachs- und zentrikbezüglichen Gleichschaltung bauungleicher Artikulatoren mit der Möglichkeit des Austausches von Kiefermodellen nach Anspruch 1 - 3, wobei
die verwendete Gleichschsltvorrichtung eine gerätekompatible Artikulatorbasisplatte (9) aufweist, der eine bevorzugt parallele und vertikal und horizontal verfahrbare Trägerplatte (10) zugeordnet ist, die in exakter Führung mittels Relief (32) die einzubauenden Splitcastplatten (1) aufnimmt und damit bei Incisalstift-(8)-Einstellung-O die übereinstimmende räumliche Beziehung dieser Splitcastplatten (1) zu den jeweiligen Artikulator-Schamierachsen (6) nach Gleichschaltung gewährleistet.

5. Verfahren zur scharnierachs- und zentrikbezüglichen Gleichschaltung bauungleicher Artikulatoren mit der Möglichkeit des Austausches von Kiefermodellen nach Anspruch 1 - 4, wobei
die verwendete Gleichschaltvorrichtung einen Ausrichtbogen (11) und einen Markierungsmechanismus (12) aufweist, der beim Ausgangsartikulator (2a) einjustiert und in dieser Lage während der Gleichschaltung aller Artikulatoren (2) relativ zur Trägerplatte (10) verbleibt.

6. Verfahren zur scharnierachs- und zentrikbezüglichen Gleichschaltung bauungleicher Artikulatoren mit der Möglichkeit des Austausches von Kiefermodellen nach Anspruch 1, wobei
zur zentrikbezüglichen Gleichschaltung als Ausgangsartikulator (2b) das Gerät mit dem vertikalen Minimalabstand B vom Artikulator-Unterkieferarm (13) zur Scharnierachse (6) Verwendung findet.

7. Verfahren zur scharnierachs- und zentrikbezüglichen Gleichschaltung bauungleicher Artikulatoren mit der Möglichkeit des Austausches von Kiefermodellen nach Anspruch 1 und 6, wobei
im Ausgangsartikulator (2b) die Unterkiefer-Splitcastplatte (1) bevorzugt horizontal an der entsprechenden Artikulatormontageplatte (4) lösbar fixiert wird.

8. Verfahren zur scharnierachs- und zentrikbezüglichen Gleichschaltung bauungleicher Artikulatoren mit der Möglichkeit des Austausches von Kiefermodellen nach Anspruch 1, wobei
bei sogenannten Arcon-Artikulatoren (2) die imaginäre Schamierachse (6) über ein Hilfsgerät (14) auffindbar ist.

9. Vorrichtung zur Durchführung des Verfahrens nach Anspruch 1 - 8, welche
aus einer Artikulatorbasisplatte (9) besteht, die mit einer Grundplatte (15) über eine Schraube (16) arretierbar ist, wobei die Grundplatte (15) mit einem Langloch (17), in das die Schraube (16) eingreift, in ihrer Ebene verschiebbar angeordnet ist, und wobei die Grundplatte (15) senkrecht zu ihrer Fläche eine Hülse oder ein Rohr (18) trägt, in der oder in dem exakt geführt ein Rundstab (19) oder eine weitere Hülse in der Vertikalen verfahrbar und axial rotierbar angeordnet ist, die über die Fixationsschraube (20) feststellbar ist, wobei am Rundstab (19) an seinem, der Artikulatorbasilplatte (9) gegenüberliegenden Ende eine Trägerplatte (10) montiert ist, die über ein eingelassenes Eisenplättchen (21), eine mit einem Magneten (22) versehene Splitcastplatte (1) exakt reponierbar trägt und die darüberhinaus ein Halteelement (23) besitzt, das in seiner Führung (24) einen sogenannten Ausrichtbogen (11) bevorzugt aus Rundmaterial in seinem Queranteil (25) arretierbar aufnimmt, der mit seinen Seitannen (26) auf die jeweilige Scharnierachse (6) des bestückten Artikulators (2) durch Markierungsmechanismen (12) ausrichtbar ist, und wobei die Splitcastplatte (1) einer Artikulatormontageplatte (4) über ein zunächst viskoses Medium wie Gips, Kunststoff o.a. (5) räumlich zugeordnet und nach Aushärten desselben mit dieser verbunden ist.

10. Vorrichtung nach Anspruch 9, wobei
die Artikulatorbasisplatte (9) Gewinde (27) und Einfräsungen (28) aufweist, die zum Einbau in den jeweiligen Artikulatortyp (2) dienen, und daß sie darüberhinaus eine Gewindebohrung (29) besitzt, die die Schraube (16) zur Arretierung der Grundplatte (15) aufnimmt.

11. Vorrichtung nach Anspruch 9 oder 10, wobei
das Langloch (17) die Verfahrbarkeit der Grundplatte (15) auf der Artikulatorbasisplatte (9) ermöglicht, wenn die Fixationsschraube (16) in nicht aktiviertem Zustand in die Gewindebohrung (29) der Artikulatorbasisplatte (9) eingedreht ist.

12. Vorrichtung nach Anspruch 9 - 11, wobei
auf der Grundplatte (15) mehrere Hülsen (18) senkrecht angeordnet sind, die jeweils einen paßgenau gearbeiteten Stab (19) oder eine weitere Hülse (19) aufnehmen, die vertikal verschiebbar und in einzelner Anordnung axial rotierbar angeordnet und über die Fixationsschraube (20) fixierbar sind.

13. Vorrichtung nach Anspruch 9 - 11, wobei
auf der Grundplatte (15) mehrere Rundstäbe (19) angeordnet sind, über denen vertikal verfahrbar und in Einzelanordnung axial rotierbar exakt angepaßte Hülsen (18) aufschiebbar und über die Fixationsschraube (20) arretierbar angeordnet sind.

14. Vorrichtung nach Anspruch 9 - 11, wobei das in Anspruch 9 angegebene Merkmal betreffend die Grundplatte (15) welche eine Hülse oder ein Rohr (18) trägt in der oder in dem exakt geführt ein Rundstab (19) oder eine weitere Hülse in der Vertikalen verfahrbar und axial rotierbar angeordnet ist, dadurch ersetzt ist, daß auf der Grundplatte (15) ein oder mehrere Profile angeordnet sind, auf denen geschiebeartig jeweils ein zweites, exakt darauf abgestimmtes Profil vertikal verschiebbar und arretierbar angeordnet ist.

15. Vorrichtung nach Anspruch 9 - 14, wobei
auf dem oder den vertikal verschiebbaren Hülsen (18), Rundstäben (19) oder Profilen die Trägerplatte (10) montiert ist, die auf der der Arretierung gegenüberliegenden Seite ein negatives oder positives Relief (32) trägt, das zur Aufnahme der Splitcastplatte (1) geeignet ist.

16. Vorrichtung nach Anspruch 9 - 15, wobei alternativ zum entsprechenden Merkmal von Anspruch 9 in der Trägerplatte (10) ein Magnet (22) integriert ist, der zum Halt der Splitcastplatte (1) dient, wobei hier ein Eisenplättchen (21) eingelassen ist.

17. Vorrichtung nach Anspruch 9 - 16, wobei das an der Trägerplatte (10) angebrachte Halteelement (23) über eine Fixationsschraube (33) den Ausrichtbogen (11) feststellt, der beidseitig des Querarmes (25) in einer Ebene bevorzugt in einem Winkel α (30) von 90° parallel zueinander die Seitarme (26) besitzt und bevorzugt aus Rundmaterial vorliegt.

18. Vorrichtung nach Anspruch 9 - 17, wobei die rechtwinkelig angeordneten Seitarme (26) des Ausrichtbogens (11) jeweils einen Markierungsmechanismus (12) aufweisen, der in Richtung der parallel zueinander ausgerichteten Seitanne (26) des Ausrichtbogens (11) verschiebbar und arretierbar ist.

19. Vorrichtung zur Durchführung des Verfahrens nach Anspruch 9, wobei die Splitcastplatte (1) ein negatives oder positives Relief (34) trägt, das das Abnehmen und die sichere Reposition von aufgegipsten Kiefermodellen (35) erlaubt.

20. Vorrichtung nach Anspruch 9 und 19, wobei
die Splitcastplatte (1) mit einem Magneten (22) versehen ist, der in einem Eiseneinsatz (36) durch seine eigene Magnetkraft herausnehmbar fixiert ist und der ein aufgegipstes Kiefermodell (35) über ein dort eingegipstes Eisenplättchen (37) festhält.

21. Vorrichtung nach Anspruch 9 und 19, wobei
die Splitcastplatte (1) mit einem Eisenkern (38) (nicht dargestellt) versehen ist, der ein aufgesetztes Kiefermodell (35) über einen dort eingegipsten Magneten festhält.

22. Vorrichtung nach Anspruch 9 und 19 - 21, wobei
die Splitcastplatte (1) auf ihrer dem Modell (35) gegenüberliegenden Seite, Rententionen (39) wie Zapfen, Gewinde mit Schrauben oder untersichgehende Aussparungen aufweist, die dem Verbindungsmedium (5) als Halt dienen.

23. Vorrichtung nach Anspruch 9, wobei
die Artikulatormontageplatte (4) Gewinde (27) und Einfräsungen (28) aufweist, die zum Einbau in den jeweiligen Artikulatortyp (2) dienen.

24. Vorrichtung nach Anspruch 9 und 19 - 23, wobei
die Artikulatormontageplatte (4) versetzt von den artikulatorspezifischen Gewinde (27) und Fräsungen (28) ebenfalls Retentionsstellen (40) für das Verbindungsmedium (5) in Form von untersichgehenden Aussparungen oder konischen Durchbohrungen (40) aufweist, die mit den Retentionen (39) insofern korrespondieren, als Retentionen (39) der Splitcastplatte (1) in der Ausgangsposition störungsfrei in die Retentionsaussparungen (40) Artikulatormontageplatte (4) eingreifen und bei einer erforderlichen räumlichen Veränderung der Lage der Splitcastplatte (1) sich die Retentionselemente (39) der Splitcastplatte (1) und die Retentionsstellen (40) der Artikulatormontageplatte (4) nicht beeinflussen.

25. Vorrichtung nach Anspruch 9, wobei
zum schädelbezüglichen Einbau von Kiefermodellen (35) die Artikulatorbasisplatte (9) parallel zu den artikulatoapezifischen Fräsungen (28) und Gewinde (27) ein positives oder negatives Relief (41) trägt, das mit einem negativen oder positiven Relief (42) der Grundplatte (15) derart korrespondiert, daß die Grundplatte (15) auf der Artikulatorbasisplatte (9) lediglich sagittal verschiebbar ist, und daß zur Fixation der Grundplatte (15) Fixationsschrauben (16) dienen, die durch bevorzugt symmetrisch angeordnete Langlöcher (17) der Grundplatte (15) geführt in die Artikulatorbasisplatte (9) eingreifen.

26. Vorrichtung nach Anspruch 9, 12, 13, wobei
zum schädelbezüglichen Einbau von Kiefermodellen (35) an dem paßgenau gearbeiteten Innenstab (19) oder der Innenhülse (19) in exakt vertikaler Richtung eine Markierung (43) angebracht ist, die mit einer zweiten Markierung (44) an der Außenhülse (18) korrespondiert und die es ermöglicht, die Drehrichtung bzw. die Position des Innenstabes (19) mit der montierten Trägerplatte (10) bei Einzelanordnung von Hülse (18) und Stab (19) festzulegen.

27. Vorrichtung nach Anspruch 9, 17, 18, wobei
zum schädelbezüglichen Einbau von Kiefermodellen (35) der Ausrichtbogen (11) in seinem Querarm (25) starr mit Schrauben (31) an der Trägerplatte (10) fixiert ist und die Seitarme (26) über jeweils ein Gelenk (45) rotierbar und mittels Schraube (48) fixierbar angeordnet sind.

28. Vorrichtung nach Anspruch 9, 17, 18, 27, wobei
zum schädelbezüglichen Einbau von Kiefermodellen (35) die rechtwinkelig angeordneten Seitanne (26) des Ausrichtbogens (11) jeweils einen Markierungsmechanismus (12) aufweisen, der in Richtung der parallel zueinander ausgerichteten Seitarme (26) des Ausrichtbogens (11) verschiebar und mittels Schraube (47) arretierbar ist.

29. Vorrichtung nach Anspruch 9, 18, 28, wobei
zum schädelbezüglichen Einbau von Kiefermodellen (35) der Markierungsmechanismus (12) bei z. B. vierkantprofilförmigen Seitarmen (26) des Ausrichtbogens (11) Schlitten (48) geformt ist, der über eine Fixationsschraube (47) arretierbar ist und rechtwinkelig zu seiner Laufrichtung verschiebbar eine Nadel (50) aufnimmt, die bevorzugt mit Feder (51) vorgespannt exakt horizontal und reproduzierbar auf das Rotationszentrum (16) des jeweiligen Artikulators (2) ausrichtbar ist.

30. Vorrichtung nach Anspruch 9, 23, 24, wobei
die Artikulatormontageplatte (4) in verschiedenen Stärken zur Verfügung steht, oder daß zur räumlichen Distanzüberbrückung zwischen Splitcastplatte (1) und Artikulatormontageplatte (4) Distanzplatten (52) oder Rahmen (53) Verwendung finden, die die Verbindungsfuge (54) über das Verbindungsmedium (5) minimieren.

31. Vorrichtung nach Anspruch 9, 22, 24, wobei
zur Rentention für das Verbindungsmedium (5) Schrauben (55) benutzt werden, die bevorzugt als Senkkopfschrauben durch die Splitcastplatte (1) geführt und auf der, dem Modell (35) gegenüberliegenden Seite mit untersichgehenden Muttern (56) verbunden werden und auf diese Weise eine Trennung der Splitcastplatte (1) aus dem Verbund erlauben, wobei die Splitcastplatte (1) auf der dem Modell (35) gegenüberliegenden Seite mit Führungswülsten (57) (nicht dargestellt) oder -Aussparungen (58) versehen sind, die eine sichere Reposition in den Verbund gestatten.

32. Vorrichtung nach Anspruch 9, 19, 20, wobei
in der Splitcastplatte (1) eine Eisenplatte (59) eingearbeitet ist, die den Boden einer Magnetaufnahme (60) bildet und mit dem eingebrachten Magneten (22), der über einen Klebespalt (61) von einem Eisenring (62) umgeben ist, ein lösbares Magnettopfsystem bildet, wobei der Eisenring (62) zur Eisenplatte (59) eine Phase (63) aufweist, die mit einer entsprechenden Phase (64) der Magnetaufnahme (60) korrespondiert und damit eine Lagedefinition des Magneteisenringsystems (22, 61, 62) gewährleistet und sein Herauslösen aus der Magnetaufnahme (60) der Splitcastplatte dadurch ermöglicht, daß ein mit Haltegriff (65) versehener Eisenkern (66) auf die Seite des Magneteisenringsystems (22,61, 62) ohne Phase des Eisenrings (62) aufgesetzt eine erhöhte Haftkraft bewirkt.

33. Vorrichtung nach Anspruch 9, wobei
zur Bestimmung der imaginären Rotationsachse (6) von Arcon-Artikulatoren (2), die als künstliche Kiefergelenksköpfe auf den Artikulatorsäulen (68) jeweils eine Kugelkalotte (67) aufweisen, wobei die besagte Rotationsachse (6) durch das Kugelzentrum der Kugelkalotte (67) verläuft, ein Hilfsmechanismus (14) verwendet wird, der über eine Querverbindung (69) mit Fixationsschraube (75) verfahrbar angeordnete Schlitten (76) aufweist, die gegenüberliegend montierte Schraubenelemente (70) besitzen, die exakt aufeinander fluchten und so gestaltet sind, daß sie zur Auflage der Kugelkalotten (67) negativ konisch oder kalottenförmig ausgefräste Ausbuchtungen (71) aufweisen, über ein Gewindeanteil (72) und Führungsanteile (73, 74) in ihrer Längsrichtung zusätzlich variierbar sind und die an ihrer Außenseite punktförmig (77) das Drehzentrum der Rotationsachse (6) anzeigen.

34. Vorrichtung nach Anspruch 9 - 33, wobei
in der sogenannten Ausgangsposition die Splitcastplatte (1) und die Montageplatte (4) bündig zusammengefügt sind und daß dabei weitere Retentionselemente (93), die erhaben oder versenkt vorliegen, mit versenkten oder erhabenen Retentionsstellen (92) der Splitcastplatte (1) so korrespondieren, daß sie beim Zusammenfügen der beiden Platten exakt ineinandergreifen und damit die Ausgangsposition jederzeit reproduzierbar machen.

## Claims

1. A process for aligning articulators of different construction along the hinge axis and with respect to the central point with the possibility of interchanging jaw models, where
identical model support or split-cast plates (1), which are hence suitable for jaw model (35) replacement and which are connected in each case to a specific upper jaw mounting plate (4) via a hardening connection medium (5), are fixed in a detachable manner with the specific upper jaw mounting plate (4) to the relevant upper jaw arm (3) of the articulator in articulators of different constructions (2) for alignment with reference to the hinge axis, such that, in the case of all adjusted articulators (2) a matching relationship between their spatial position and the relevant hinge axis (6) is ensured, the position of the location of the upper jaw split-cast plate (1), integrated here in horizontal and vertical direction
as desired but preferably in an optimised relation to the hinge axis (6), being measured off and aligned to the hinge axes (6) of articulators (2) to be aligned, by horizontal and vertical movement using a device compatible with the articulator and based on a starting articulator (2a), and where alignment with reference to the central point is achieved by identical spatial assignment of a second, preferably identical, split cast plate (1) using a so-called centric block (7) with the aid of which correct connection of the second split cast plate (1) to the lower jaw mounting plate (4) of the relevant articulator (2) is achieved via the hardening connection medium (5).

2. A process for aligning articulators of different construction along the hinge axis and with respect to the central point with the possibility of interchanging jaw models, in accordance with Claim 1, where
that device with a minimum vertical distance A from the upper jaw arm (3) of the articulator to the hinge axis (6) at incisal pin (8) setting 0 is used as the starting articulator (2a).

3. A process for aligning articulators of different construction along the hinge axis and with respect to the central point with the possibility of interchanging jaw models, in accordance with Claims 1 and 2, where in the starting articulator (2a) the upper jaw split cast plate (1) at incisal pin setting 0 is preferably attached horizontally in a detachable manner on the relevant articulator mounting plate (4).

4. A process for aligning articulators of different construction along the hinge axis and with respect to the central point with the possibility of interchanging jaw models, in accordance with Claims 1 to 3, where the alignment device used has a device-compatible articulator baseplate (9) to which a support plate (10) is assigned, which is preferably parallel and movable both vertically and horizontally and which engages the split cast plates (1) to be incorporated with precise guidance via a relief (32) and thus ensures the matching spatial relationship at incisal pin (8) setting 0 between these split cast plates (1) and the relevant articulator hinge axes (6) after alignment.

5. A process for aligning articulators of different construction along the hinge axis and with respect to the central point with the possibility of interchanging jaw models, in accordance with Claims 1 to 4, where the alignment device used has a curved locating rod (11) and a marking mechanism (12) which is adjusted in the starting articulator (2a) and remains in this position throughout the alignment of all articulators (2) in relation to the mounting plate (10).

6. A process for aligning articulators of different construction along the hinge axis and with respect to the central point with the possibility of interchanging jaw models, in accordance with Claim 1, where
that device with the minimum vertical distance B from the lower jaw arm (13) of the articulator to the hinge axis (6) is used as the starting articulator (2b) for alignment with respect to the central point.

7. A process for aligning articulators of different construction along the hinge axis and with respect to the central point with thin possibility of interchanging jab models, in accordance with Claims 1 and 6, where
the lower jaw split cast plate (1) in the starting articulator (2b) is preferably fixed horizontally in a detachable manner on the relevant articulator mounting plate (4).

8. A process for aligning articulators of different construction along the hinge axis and with respect to the central point with the possibility of interchanging jaw models, in accordance with Claim 1, where
the imaginary hinge axis (6) in "Arcon" articulators (2) can be found using an auxiliary device (14).

9. A device for carrying out the process in accordance with Claims 1 to 8, which
consists of an articulator baseplate (9), which can be locked with a baseplate (15) via a screw (16), the baseplate (15) being movable in its plane with an elongated hole (17) in which the screw (16) engages, the baseplate (15) bearing a sleeve or tube (18) perpendicular to its surface, in which a round rod (19) or another sleeve is located, when precisely guided, so as to be movable in a vertical direction and rotatable about the axis, this round rod (19) being fixed in position by the fixing screw (20), a mounting plate (10) being mounted on the round rod (19) at the end situated opposite to the articulator baseplate (9), the mounting plate (10) supporting a split cast plate (1) fitted with a magnet (22) in a precisely adjustable position via an inset iron plate (21), and also having a retaining element (23), the guide mechanism (24) of which takes up in its transverse section (25) and can lock a curved locating rod (11), preferably of round stock, which can be aligned with its side arms (26) to the relevant hinge axis (6) of the fitted articulator (2) using marking mechanisms (12), and where the split cast plate (1) is assigned spatially to an articulator mounting plate (4) via an initially viscous medium, such as plaster, plastic, etc. (5), and which is connected to this medium (5) after the latter has hardened.

10. A device in accordance with Claim 9, where
the articulator baseplate (9) has a thread (27) and milled recesses (28) used for incorporation into the relevant articulator type (2), and where it also has a threaded bore (29) which takes up the screw (16) for locking the baseplate (15).

11. A device in accordance with Claim 9 or 10, where
the elongated hole (17) permits the displacement of the baseplate (15) on the articulator baseplate (9) when the fixing screw (16) is screwed in the non-activated condition into the threaded bore (29) of the articulator baseplate (9).

12. A device in accordance with Claims 9 to 11, where
several sleeves (18) are located vertically on the baseplate (15), each engaging a rod (19) machined to fit precisely or another sleeve (19), these being located so as to be vertically movable and to rotate axially in their individual positions and which can be fixed via the fixing screw (20).

13. A device in accordance with Claims 9 to 11, where
several round rods (19) are located on the baseplate (15), above which precisely fitted sleeves (18) are located so as to be vertically movable and to rotate axially in their individual positions, which slide on to the rods (19) and which can be locked via the fixing screw (20).

14. A device in accordance with Claims 9 to 11, where
the characteristic described in Claim 9 with respect to the baseplate (15), which hears a sleeve or a tube (18) in which a round rod (19) or another sleeve is located, being precisely guided so as to be movable in a vertical direction and rotatable about the axis, is replaced by one or more profiled sections being located on the baseplate (15), on each of which a second profiled section precisely adapted to the first is located in a sliding manner, being vertically movable and lockable.

15. A device in accordance with Claims 9 to 14, where
the mounting plate (10) is mounted on the vertically movable sleeve(s) (18), round rod(s) (19) or profiled section(s), the mounting plate (10) having a negative or positive relief (32) on that side opposite the lock, designed to engage the split cast plate (1).

16. A device in accordance with Claims 9 to 15, where
as an alternative to the relevant characteristic in Claim 9
a magnet (22) is integrated into the mounting plate (10), serving to hold the split cast plate (1), a small iron plate (21) being embedded here.

17. A device in accordance with Claims 9 to 16, where
the retaining element (23) attached to the mounting plate (10) immobilises the curved locating rod (11) via a fixing screw (33), the curved locating rod (11) having side arms (26) on either side of the transverse arm (25) parallel to one another in one plane, preferably at an angle α (30) of 90°, and the aligning rod (11) preferably consisting of round stock.

18. A device in accordance with Claims 9 to 17, where
the side arms (26) located at right angles to the curved locating rod (11) each have a marking mechanism (12) which can be moved and locked in the direction of the side arms (26) of the curved locating rod (11), which are arranged parallel to one another.

19. A device in accordance with Claim 9, where
the split cast plate (1) has a negative or positive relief (34) permitting the removal and secure repositioning of jaw models (35) which have been plastered on.

20. A device in accordance with Claims 9 and 19, where
the split cast plate (1) is fitted with a magnet (22), which is fixed in a removable manner in an iron insert (36) by its own magnetic force and which holds a plastered-on jaw model (35) firmly via a small iron plate (37) which has been plastered in to it.

21. A device in accordance with Claims 9 and 19, where
the split cast plate (1) is fitted with an iron core (38) (not illustrated), which holds firmly a jaw model (35) placed in position via a magnet plastered in to it.

22. A device in accordance with Claims 9 and 19 to 21, where
the split cast plate (1) has retaining elements (39), such as pins, threads with screws or recesses fitting one below the other, on the side opposite the model (35), which serve to hold the connection medium (5) in place.

23. A device in accordance with Claim 9, where
the articulator mounting plate (4) has a thread (27) and milled recesses (28) which are incorporated in the relevant articulator type (2).

24. A device in accordance with Claims 9 and 19 to 23, where
the articulator mounting plate (4) also has retention points (40) offset from the articulator-specific thread (27) and milled recesses (28) for the connection medium (5) in the form of recesses or conical bored holes (40), fitting one below the other, corresponding to the retaining elements (39) insofar as retaining elements (39) in the split cast plate (1) engage in their starting position without interference in the retention recesses (40) of the articulator mounting plate (4) and, in the event of a necessary spatial alteration in the position of the split cast plate (1), the retaining elements (39) of the split cast plate (1) and the retention points (40) of the articulator mounting plate (4) do not interfere with one another.

25. A device in accordance with Claim 9, where
for integration of jaw models (35) with respect to the cranium, the articulator baseplate (9) has a positive or negative relief (41) parallel to the articulator-specific milled recesses (28) and thread (27), this relief (41) corresponding to a negative or positive relief (42) on the baseplate (15) such that the baseplate (15) can be moved only sagittally on the articulator baseplate (9) and fixing screws (16) are used to fix the baseplate (15) in position, which engage by passing into the articulator baseplate (9) via preferably symmetrically arranged elongated holes (17) in the baseplate (15).

26. A device in accordance with Claims 9, 12 and 13, where
for integration of jaw models (35) with respect to the cranium, a marking (43) is applied to the internal rod (19), which has been machined to fit perfectly, or the internal sleeve (19) in a precisely vertical direction, this marking (43) corresponding to a second marking (44) on the external sleeve (18) and permitting the direction of rotation and/or the position of the internal rod (19) to be established with the mounting plate (10) mounted where sleeve (18) and rod (19) are positioned individually.

27. A device in accordance with Claims 9, 17 and 18, where
for integration of jaw models (35) with respect to the cranium, the curved locating rod (11) has its transverse arm (25) fixed rigidly with screws (31) to the mounting plate (10) and the side arms (26) are rotatable via one joint (45) each and are located so as to be fixed by a screw (46).

28. A device in accordance with Claims 9, 17, 18 and 27, where
for integration of jaw models (35) with respect to the cranium, the perpendicularly located side arms (26) of the curved locating rod (11) each have a marking mechanism (12) which can be displaced in the direction of the side arms (26) of the curved locating rod (11), which are designed to be parallel to one another, and which can be locked by a screw (47).

29. A device in accordance with Claims 9, 18 and 28, where
for integration of jaw models (35) with respect to the cranium, the marking mechanism (12) is designed as a saddle (48) for side arms (26) of the locating rod (11) with a square section, for example, this saddle (48) being lockable via a fixing screw (47) and engaging a needle (50) in a movable manner perpendicular to its direction of travel, the needle (50) preferably being pre-tensioned with a spring (51) to be precisely horizontal and capable of being reproducibly aligned on the centre of rotation (6) of the relevant articulator (2).

30. A device in accordance with Claims 9, 23 and 24, where
the articulator mounting plate (4) is available in various thicknesses or where distance plates (52) or frames (53) are used to bridge the spatial distance between the split cast plate (1) and the articulator mounting plate (4), which minimise the connection joint (54) made by the connection medium (5).

31. A device in accordance with Claims 9, 22 and 24, where
screws (55) are used as retaining elements for the connection medium (5), preferably passed through the split cast plate (1) as countersunk head screws and connected on that side opposite to the model (35) with nuts below (56), thus permitting separation of the split cast plate (1) from the bond, the split cast plate (1) being fitted on that side opposite to the model (35) with guide beads (57) (not shown illustrated) or guide recesses (58), which permit secure repositioning in the bond.

32. A device in accordance with Claims 9, 19 and 20, where
an iron plate (59) is worked into the split cast plate (1), forming the base of a magnet retainer (60) and forming, once the magnet (22), surrounded by an iron ring (62) via a bonded aperture (61), is in place, a detachable magnetic pot system, the iron ring (62) possessing a phase (63) to the iron plate (59) which corresponds to a corresponding phase (64) of the magnet retainer (60) and thus guarantees position definition of the magnetic iron ring system (22, 61, 62) and permits its removal from the magnet retainer (60) of the split cast plate by having an iron core (66) fitted with a handle (65) attached to that side of the magnetic iron ring system (22, 61, 62) without the iron ring (62) phase, which causes increased adhesive power.

33. A device in accordance with Claim 9, where
to determine the imaginary axis of rotation (6) of "Arcon" articulators (2), which each have a universal ball joint (67) on the articulator supports (68), acting as artificial condyles of the jaw, the said axis of rotation (6) running through the centre of the ball of the universal ball joint (67), an auxiliary mechanism (14) is used, involving saddles (76) which are movable via a transverse connection (69) with a fixing screw (75), which have screw elements (70) mounted opposite one another, which align precisely with one another and which are designed such that they have negatively conical or dome-shaped milled recesses (71) to support the universal ball joints (67), they can also be varied in a longitudinal direction via a thread section (72) and guide sections (73, 74) and they indicate the centre of rotation of the axis of rotation (6) by means of a dot (77) on the outside.

34. A device in accordance with Claims 9 to 33, where
in the so-called starting position, the split cast plate (1) and the mounting plate (4) are joined flush with one another and in this position additional retaining elements (93), either raised or countersunk, correspond to countersunk or raised retention points (92) on the split cast plate (1), such that when the two plates are joined they engage precisely with one another so that the starting position is reproducible at any time.

## Revendications

1. Procédé pour rendre des articulateurs constructivement différents équivalents du point de vue de l'axe de charnière et du centrage, avec la possibilité de transférer des modèles de mâchoires,
selon lequel des plaques porte-modèle ou plaques "split cast" (1), identiques et convenant donc pour transférer les modèles de mâchoires (35) -ces plaques étant respectivement assemblées par l'intermédiaire d'un agent d'assemblage durcissant (5) à une plaque de montage de mâchoire supérieure (4) spécifique-, ces plaques donc sont, en vue de rendre des articulateurs constructivement différents (2) équivalents du point de vue de l'axe de charnière, fixées, munies de la plaque de montage de mâchoire supérieure (4) spécifique, de manière amovible dans ces articulateurs (2), au bras de mâchoire supérieure (3) de l'articulateur respectif, de telle sorte que, tous les articulateurs (2) étant ajustés, une relation coïncidente de leur position spatiale par rapport à l'axe de charnière respectif (6) est garantie, par le fait qu'au moyen d'un dispositif compatible avec l'articulateur, en partant d'un articulateur de référence (2a), la position de la plaque "split cast" (1) de mâchoire supérieure, qui est ici montée
en direction horizontale et verticale arbitrairement mais de préférence dans une relation optimisée avec l'axe de charnière (6), est mesurée et, par un déplacement horizontal et vertical, égalisée pour les axes de charnière (6) d'articulateurs (2) à rendre équivalents, et selon lequel l'équivalence concernant le centrage est réalisée par une association spatiale identique d'une seconde plaque "split cast" (1), de préférence identique, en utilisant ce qu'on appelle un bloc de centrage (7), à l'aide duquel s'effectue l'assemblage correct de la seconde plaque "split cast" (1) avec la plaque de montage de mâchoire inférieure (4) de l'articulateur respectif (2), par l'intermédiaire de l'agent d'assemblage durcissant (5).

2. Procédé selon la revendication 1 pour rendre des articulateurs constructivement différents équivalents du point de vue de l'axe de charnière et du centrage, avec la possibilité de transférer des modèles de mâchoires,
selon lequel on utilise comme articulateur de référence (2a) l'appareil présentant la distance verticale minimale (A) entre le bras de mâchoire supérieure (3) de l'articulateur et l'axe de charnière (6), la pointe d'incision (8) étant réglée à 0.

3. Procédé selon la revendication 1 ou 2 pour rendre des articulateurs constructivement différents équivalents du point de vue de l'axe de charnière et du centrage, avec la possibilité de transférer des modèles de mâchoires,
selon lequel, dans l'articulateur de référence (2a), la pointe d'incision étant réglée à 0, la plaque "split cast" (1) de mâchoire supérieure est de préférence fixée, de manière amovible, horizontalement sur la plaque de montage correspondante (4) de l'articulateur.

4. Procédé selon l'une des revendications 1 à 3 pour rendre des articulateurs constructivement différents équivalents du point de vue de l'axe de charnière et du centrage, avec la possibilité de transférer des modèles de mâchoires,
selon lequel le dispositif utilisé pour réaliser l'équivalence présente une plaque de base d'articulateur (9) compatible avec l'appareil, à laquelle est associée une plaque porteuse (10), de préférence parallèle et à déplacement horizontal et vertical, qui reçoit d'une manière précisément guidée, au moyen d'un relief (32), les plaques "split cast" (1) à monter et garantit ainsi, la pointe d'incision (8) étant réglée à 0, la relation spatiale coïncidente de ces plaques "split cast" (1) avec les axes de charnière respectifs (6) des articulateurs, une fois l'équivalence réalisée.

5. Procédé selon l'une des revendications 1 à 4 pour rendre des articulateurs constructivement différents équivalents du point de vue de l'axe de charnière et du centrage, avec la possibilité de transférer des modèles de mâchoires,
selon lequel le dispositif utilisé pour réaliser l'équivalence présente une arcade d'alignement (11) et un mécanisme de marquage (12), qui est ajusté sur l'articulateur de référence (2a) et reste dans cette position pendant la réalisation de l'équivalence de tous les articulateurs (2) par rapport à la plaque porteuse (10).

6. Procédé selon la revendication 1 pour rendre des articulateurs constructivement différents équivalents du point de vue de l'axe de charnière et du centrage, avec la possibilité de transférer des modèles de mâchoires,
selon lequel, en vue de réaliser l'équivalence concernant le centrage, on utilise comme articulateur de référence (2b) l'appareil présentant la distance verticale minimale (B) entre le bras de mâchoire inférieure (13) de l'articulateur et l'axe de charnière (6).

7. Procédé selon les revendications 1 et 6 pour rendre des articulateurs constructivement différents équivalents du point de vue de l'axe de charnière et du centrage, avec la possibilité de transférer des modèles de mâchoires,
selon lequel, dans l'articulateur de référence (2b), la plaque "split cast" (1) de mâchoire inférieure est de préférence fixée, de manière amovible, horizontalement sur la plaque de montage correspondante (4) de l'articulateur.

8. Procédé selon la revendication 1 pour rendre des articulateurs constructivement différents équivalents du point de vue de l'axe de charnière et du centrage, avec la possibilité de transférer des modèles de mâchoires,
selon lequel, pour des articulateurs (2) du type "Arcon", l'axe de charnière imaginaire (6) peut être trouvé à l'aide d'un appareil auxiliaire (14).

9. Dispositif pour la mise en oeuvre du procédé selon l'une des revendications 1 à 8,
constitué d'une embase d'articulateur (9) pouvant être bloquée contre une plaque de base (15) à l'aide d'une vis (16), la plaque de base (15) pouvant être déplacée dans son plan grâce à un trou oblong (17) dans lequel s'engage la vis (16), et la plaque de base (15) portant, perpendiculairement à sa surface, un manchon ou tube (18) dans lequel, en étant guidé avec précision, une barre ronde (19) ou un autre manchon peut être verticalement déplacé et axialement mis en rotation, et bloqué au moyen d'une vis de fixation (20), une plaque porteuse (10) étant montée à l'extrémité de la barre ronde (19) opposée à l'embase d'articulateur (9), plaque qui, à l'aide d'une plaquette de fer encastrée (21), porte de manière précisément repositionnable une plaque "split cast" (1) pourvue d'un aimant (22) et qui possède en outre un élément de retenue (23) recevant dans son guidage (24), avec possibilité de blocage, la partie transversale (25) d'une "arcade d'alignement" (11), de préférence en matériau rond, dont les bras latéraux (26) peuvent, au moyen de mécanismes de marquage (12), être alignés sur l'axe de charnière respectif (6) de l'articulateur équipé (2), et la plaque "split cast" (1) étant spatialement associée à une plaque de montage d'articulateur (4) par l'intermédiaire d'un agent initialement visqueux tel que du plâtre, un matériau synthétique ou similaire (5), et étant assemblée à cette plaque une fois cet agent durci.

10. Dispositif selon la revendication 9,
dans lequel l'embase d'articulateur (9) présente des filetages (27) et des fraisages (28) servant au montage dans le type d'articulateur (2) respectif, et dans lequel l'embase d'articulateur (9) possède en outre un alésage fileté (29) recevant la vis (16) pour bloquer la plaque de base (15).

11. Dispositif selon la revendication 9 ou 10,
dans lequel le trou oblong (17) permet de déplacer la plaque de base (15) sur l'embase d'articulateur (9) si la vis de fixation (16) a été vissée à un état inactif dans l'alésage fileté (29) de l'embase d'articulateur (9).

12. Dispositif selon l'une des revendications 9 à 11,
dans lequel plusieurs manchons (18) sont disposés verticalement sur la plaque de base (15) et reçoivent chacun une barre (19) usinée à la cote d'ajustement ou un autre manchon (19), qui peuvent être verticalement déplacés et axialement mis en rotation en cas de disposition individuelle, et bloqués au moyen de la vis de fixation (20).

13. Dispositif selon l'une des revendications 9 à 11,
dans lequel plusieurs barres rondes (19) sont disposées sur la plaque de base (15), sur lesquelles des manchons (18) exactement adaptés peuvent être verticalement déplacés et axialement mis en rotation en cas de disposition individuelle, et bloqués au moyen de la vis de fixation (20).

14. Dispositif selon l'une des revendications 9 à 11,
dans lequel la caractéristique indiquée dans la revendication 9, concernant la plaque de base (15) qui porte un manchon ou tube (18) dans lequel, en étant guidé avec précision, une barre ronde (19) ou un autre manchon peut être verticalement déplacé verticalement et axialement mis en rotation, est remplacée par le fait qu'un ou plusieurs profilés sont disposés sur la plaque de base (15), sur chacun desquels un second profilé, exactement adapté, est disposé avec possibilité de coulissement vertical et de blocage.

15. Dispositif selon l'une des revendications 9 à 14,
dans lequel la plaque porteuse (10) est montée sur le ou les manchons (19), barres rondes (19) ou profilés verticalement coulissants et porte, du côté opposé au blocage, un relief négatif ou positif (32) apte à recevoir la plaque "split cast" (1).

16. Dispositif selon l'une des revendications 9 à 15,
dans lequel, en alternative à la caractéristique correspondante de la revendication 9, un aimant (22) est incorporé dans la plaque porteuse (10) et sert à maintenir la plaque "split cast" (1), dans laquelle est encastrée une plaquette de fer (21).

17. Dispositif selon l'une des revendications 9 à 16,
dans lequel l'élément de retenue (23) prévu sur la plaque porteuse (10) bloque, au moyen d'une vis de fixation (33), l'arcade d'alignement (11) qui est de préférence réalisée en matériau rond et possède des bras latéraux (26) qui sont disposés en parallèle dans un plan de part et d'autre du bras transversal (25), de préférence sous un angle α (30) de 90°.

18. Dispositif selon l'une des revendications 9 à 17,
dans lequel les bras latéraux (26) de l'arcade d'alignement (11), disposés à angle droit, présentent chacun un mécanisme de marquage (12) qui peut être déplacé dans la direction des bras latéraux parallèles (26), et bloqué en position.

19. Dispositif selon la revendication 9,
dans lequel la plaque "split cast" (1) porte un relief négatif ou positif (34), permettant la dépose et le repositionnement fiable de modèles de mâchoires (35) posés par plâtrage.

20. Dispositif selon les revendications 9 et 19,
dans lequel la plaque "split cast" (1) est pourvue d'un aimant (22) qui est fixé de manière amovible, par sa propre force magnétique, dans un insert en fer (36) et retient un modèle de mâchoire (35) posé par plâtrage, au moyen d'une plaquette de fer (37) noyée dans le plâtre sur ce dernier.

21. Dispositif selon les revendications 9 et 19,
dans lequel la plaque "split cast" (1) est pourvue d'un noyau de fer (38) (non représenté) qui retient un modèle de mâchoire (35), posé sur la plaque, par l'intermédiaire d'un aimant noyé dans le plâtre sur ce dernier.

22. Dispositif selon la revendication 9 et l'une des revendications 19 à 21,
dans lequel la plaque "split cast" (1) présente, sur son côté opposé au modèle (35), des moyens de rétention (39) tels que des tenons, des filetages avec vis ou des évidements sous-jacents, qui servent à retenir l'agent d'assemblage (5).

23. Dispositif selon la revendication 9,
dans lequel la plaque de montage d'articulateur (4) présente des filetages (27) et des fraisages (28) servant au montage dans le type d'articulateur (2) respectif.

24. Dispositif selon la revendication 9 et l'une des revendications 19 à 23,
dans lequel la plaque de montage d'articulateur (4) présente elle aussi, décalés par rapport aux filetages (27) et fraisages (28) spécifiques de l'articulateur, des points de rétention (40) pour l'agent d'assemblage (5), sous la forme d'évidements sous-jacents ou de perçages traversants coniques (40) qui correspondent avec les moyens de rétention (39) dans la mesure où des moyens de rétention (39) de la plaque "split cast" (1), dans la position de référence, s'engagent sans difficulté dans les évidements de rétention (40) de la plaque de montage d'articulateur (4) et où, lors d'une nécessaire modification spatiale de la position de la plaque (1), les éléments de rétention (39) de la plaque "split cast" (1) et les points de rétention (40) de la plaque de montage d'articulateur (4) n'ont pas d'influence réciproque.

25. Dispositif selon la revendication 9,
dans lequel, en vue de la pose de modèles de mâchoires (35) par rapport au crâne, l'embase d'articulateur (9) porte, parallèlement aux fraisages (28) et filetages (27) spécifiques de l'articulateur, un relief positif ou négatif (41), qui correspond avec un relief négatif ou positif (42) de la plaque de base (15) de telle sorte que la plaque de base (15) peut être uniquement déplacée sagittalement sur l'embase d'articulateur (9), et dans lequel des vis de fixation (16) servent à bloquer la plaque de base (15) et s'engagent dans l'embase d'articulateur (9) en étant guidées dans des trous oblongs (17) de la plaque de base (15), de préférence symétriquement disposés.

26. Dispositif selon les revendications 9, 12, 13,
dans lequel, en vue de la pose de modèles de mâchoires (35) par rapport au crâne, un marquage (43) est pratiqué en direction exactement verticale sur la barre intérieure (19) usinée à la cote d'ajustement ou sur le manchon intérieur (19), marquage qui correspond avec un second marquage (44) sur le manchon extérieur (18) et permet de fixer la direction de rotation ou encore la position de la barre intérieure (19) avec la plaque porteuse (10) montée, en cas de disposition individuelle du manchon (18) et de la barre (19).

27. Dispositif selon les revendications 9, 17, 18,
dans lequel, en vue de la pose de modèles de mâchoires (35) par rapport au crâne, le bras transversal (25) de l'arcade d'alignement (11) est fixé rigidement par des vis (31) à la plaque porteuse (10), et les bras latéraux (26) sont montés à rotation au moyen d'une articulation respective (45) et peuvent être bloqués par des vis (46).

28. Dispositif selon les revendications 9, 17, 18, 27,
dans lequel, en vue de la pose de modèles de mâchoires (35) par rapport au crâne, les bras latéraux (26) de l'arcade d'alignement (11), disposés à angle droit, présentent chacun un mécanisme de marquage (12), qui peut être déplacé dans la direction des bras latéraux parallèles (26) de l'arcade d'alignement (11), et bloqué par des vis (47).

29. Dispositif selon les revendications 9, 18, 28,
dans lequel , en vue de la pose de modèles de mâchoires (35) par rapport au crâne, le mécanisme de marquage (12), avec des bras latéraux (26) de l'arcade d'alignement (11) en forme de profilés carrés par exemple, est réalisé en forme de coulisseau (48) pouvant être bloqué par une vis de fixation (47) et recevant, à déplacement perpendiculairement à la direction de déplacement du coulisseau, une aiguille (50) qui, de préférence sous la précontrainte d'un ressort (51), peut être alignée de manière exactement horizontale et reproductible sur le centre de rotation (6) de l'articulateur respectif (2).

30. Dispositif selon les revendications 9, 23, 24,
dans lequel la plaque de montage d'articulateur (4) est disponible en différentes épaisseurs, ou dans lequel, afin de combler la distance entre la plaque "split cast" (1) et la plaque de montage d'articulateur (4), on utilise des plaques de distance (52) ou des cadres (53), qui minimisent le joint d'assemblage (54) réalisé au moyen de l'agent d'assemblage (5).

31. Dispositif selon les revendications 9, 22, 24,
dans lequel, comme moyens de rétention pour l'agent d'assemblage (5), on utilise des vis (55) qui traversent la plaque "split cast" (1) de préférence sous forme de vis à tête fraisée et sont, du côté opposé au modèle (35), assemblées à des écrous sous-jacents (56) et permettent ainsi de séparer la plaque "split cast" (1) de l'assemblage, la plaque "split cast" (1) étant pourvue, du côté opposé au modèle (35), de renflements (57) (non représentés) ou d'évidements (58) de guidage, qui assurent un repositionnement fiable dans l'assemblage.

32. Dispositif selon les revendications 9, 19, 20,
dans lequel une plaque de fer (59) est encastrée dans la plaque "split cast" (1), constitue le fond d'un logement d'aimant (60) et forme, avec l'aimant inséré (22), entouré d'une bague de fer (62) par l'intermédiaire d'un interstice de collage (61), un système détachable de pot magnétique, la bague de fer (62) présentant, par rapport à la plaque de fer (59), une phase (63) qui correspond avec une phase correspondante (64) du logement d'aimant (60) et garantit ainsi une définition de la position du système d'aimant annulaire (22, 61, 62), et permet d'enlever ce système du logement d'aimant (60) de la plaque "split cast" par le fait qu'un noyau de fer (66) pourvu d'une poignée de maintien (65), posé sur le côté du système d'aimant annulaire (22, 61, 62) dépourvu de phase de la bague de fer (62), produit une force d'adhérence supérieure.

33. Dispositif selon la revendication 9,
dans lequel, afin de déterminer l'axe de rotation imaginaire (6) d'articulateurs (2) du type "Arcon" qui, comme têtes d'articulation artificielles de mâchoires, présentent une calotte sphérique respective (67) sur les colonnes d'articulateur (68), ledit axe de rotation (6) passant par le centre de la calotte sphérique (67), on utilise un mécanisme auxiliaire (74) présentant des coulisseaux (76), qui peuvent être déplacés sur un élément d'assemblage transversal (69) à vis de fixation (75) et possèdent des éléments vissés (70) montés en vis-à-vis, qui sont précisément alignés et configurés de telle sorte qu'ils présentent, comme appuis pour les calottes sphériques (67), des évidements (71) fraisés en cônes négatifs ou en calottes, les éléments vissés (70) pouvant en outre être déplacés dans leur direction longitudinale au moyen d'une partie filetée (72) et de parties de guidage (73, 74), et indiquant sur leur côté extérieur, sous la forme d'un point (77), le centre de rotation de l'axe de rotation (6).

34. Dispositif selon l'une des revendications 9 à 33,
dans lequel, dans la position dite de référence, la plaque "split cast" (1) et la plaque de montage (4) sont réunies à surface plane, et dans lequel des éléments de rétention supplémentaires (93), présents en relief ou en retrait, correspondent avec des points de rétention (92) en retrait ou en relief de la plaque "split cast" (1) de telle sorte que, lors de la réunion des deux plaques, ils s'engagent exactement les uns dans les autres et permettent ainsi de reproduire à tout moment la position de référence.
